# EUROPÄISCHE PATENTSCHRIFT

(11) **EP 4 216 784 B1**
(45) Veröffentlichungstag und Bekanntmachung des Hinweises auf die Patenterteilung: **06.11.2024**
(21) Anmeldenummer: 21777460.3
(22) Anmeldetag: 10.09.2021
(51) Int. Cl.: A47L 9/10, A47L 9/12, A47L 9/20, A47L 5/36

(54) **FILTEREINRICHTUNG UND VERFAHREN ZU DEREN ABREINIGUNG**
FILTER DEVICE AND METHOD FOR ITS CLEANING
DISPOSITIF FILTRANT ET SON PROCÉDÉ DE NETTOYAGE

(30) Priorität: 23.09.2020 EP 20197753
(43) Veröffentlichungstag der Anmeldung: 02.08.2023
(73) Patentinhaber: Hilti Aktiengesellschaft, 9494 Schaan (LI)
(72) Erfinder: OHLENDORF, Oliver, 86899 Landsberg (DE)
(74) Vertreter: Hilti Aktiengesellschaft Corporate Intellectual Property
(86) Internationale Anmeldenummer: PCT/EP2021/074946
(87) Internationale Veröffentlichungsnummer: WO 2022/063605

(56) Entgegenhaltungen:
- DE-A1- 102016 101 414

## Beschreibung

Die Erfindung betrifft eine Filtereinrichtung für einen Staubsauger mit einer Turbineneinrichtung und einem Motor zur Erzeugung von einem ersten und/oder einem zweiten Hauptluftstrom durch einen Sammelbehälter des Staubsaugers, wobei der Staubsauger zwei Kammern umfasst und Filterelemente der vorgeschlagenen Filtereinrichtung durch eine schlagartige Positionsänderung eines Druckstoßelements in den Kammern abgereinigt werden. Dadurch, dass bei Abreinigung einer der beiden Kammern der Saugbetrieb des Staubsaugers durch die andere Kammer aufrechterhalten werden kann, kann die Filterabreinigung vorteilhafterweise während eines fortgesetzten Saugbetrieb des Staubsaugers erfolgen. In einem zweiten Aspekt betrifft die Erfindung ein Verfahren zum Abreinigen einer Filtereinrichtung in einem Staubsauger, wobei durch Betätigung eines Ventils ein Unterdruck aus einer der beiden Kammern verdrängt und durch einen atmosphärischen Druck ersetzt wird. Durch diese Druckänderung kann vorteilhafterweise eine Positionsänderung des Druckstoßelements bewirkt werden, die zu einer Erschütterung des Filterelements und zu einer Abreinigung der Filtereinrichtung führt.

### Hintergrund der Erfindung:

Auf Baustellen werden oftmals Staubsauger verwendet, um Schmutzpartikel in Form von Staub, Bohrmehl oder dergleichen auf- oder einzusaugen. Zum Aufsammeln des Schmutzes wird mittels einer Turbine ein Unterdruck im Inneren des Staubsaugers erzeugt. Über einen Schlauch, der mit dem Staubsauger verbunden ist, wird der Unterdruck genutzt, um Schmutzpartikel aufzusaugen und in einen Auffangbehälter des Staubsaugers zu transportieren. Handelsübliche Staubsauger sind gewöhnlich so aufgebaut, dass die Turbine, ein Filter, der Auffangbehälter sowie die Eintrittsöffnung für die angesaugten Schmutzpartikel hintereinander bzw. auf einem Strömungspfad liegen. Üblicherweise ist zwischen dem Auffangbehälter bzw. der Eintrittsöffnung für die angesaugten Schmutzpartikel und der unterdruckerzeugenden Turbine der Filter positioniert. Da die angesaugte, mit Schmutzpartikeln angereicherte Luft durch die Turbine strömen würde und folglich die Turbine verschmutzen bzw. beschädigen würde, dient der Filter zur Reinigung der angesaugten Luft und damit insbesondere zum Schutz der Turbine.

Ein Problem kann jedoch entstehen, wenn der Filter keine ausreichende Filterfunktion mehr leisten kann und angesaugte Schmutzpartikel nicht mehr aus der durch den Filter strömenden Luft herausgefiltert werden können. Dies ist insbesondere der Fall, wenn aufgrund eines länger andauernden Einsatzes des Staubsaugers der Filter zunehmend verschmutzt, d.h. mit Schmutzpartikeln angefüllt ist. Um den Filter funktionsfähig zu halten, muss dieser zwischenzeitlich gereinigt und von den aufgenommenen Schmutzpartikeln befreit werden. Zur Reinigung des Filters muss jedoch bei handelsüblichen Staubsaugern der Betrieb desselben abgeschaltet bzw. unterbrochen werden, so dass der Sauger geöffnet und der Filter zur Entfernung der aufgenommenen Schmutzpartikel entnommen werden kann. Derartige Aktivitäten unterbrechen jedoch den Staubsaugvorgang und sind sehr zeitraubend.

Gemäß dem Stand der Technik existieren auch bereits Staubsauger, die eine Vorrichtung zur Abreinigung des Filters aufweisen, ohne dass der Staubsauger hierzu abgeschaltet, geöffnet und der Filter zur Entfernung der aufgenommenen Schmutzpartikel entnommen werden muss. Nachteilig an derartigen Vorrichtungen ist jedoch, dass auch bei diesen Staubsaugern der Saugbetrieb des Staubsaugers während der Abreinigung des Filters unterbrochen werden muss. Alternativ kann der Saugbetrieb mit reduzierter Leistung fortgesetzt werden. In den meisten Fällen sinkt durch die Saugunterbrechung die Absaugleistung des Staubsaugers und Staubpartikel entweichen unerwünschterweise in die Atmosphäre, wo sie die Staubkonzentration erhöhen. Häufig sind bekannten Filterabreinigungsvorrichtungen komplex aufgebaut und aus vielen Komponenten zusammengesetzt. Dadurch sind konventionelle Filterabreinigungsvorrichtungen, wie sie aus dem Stand der Technik bekannt sind, häufig fehler-, verschleiß- oder wartungsanfällig.

Beispielsweise offenbart die DE 10 2016 101 414 A1 ein Saugreinigungsgerät, wie zum Beispiel einen akkubetriebenen Handstaubsauger, wobei ein Luftfilter des Saugreinigungsgeräts in einem Regenerationsbetrieb in einer zur Saugbetriebsrichtung entgegengesetzten Richtung durchströmt werden kann. Bei dieser auf Rückspülung basierenden Filterabreinigung ist der Filter insbesondere verlagerbar in dem Saugreinigungsgerät gelagert.

Aufgabe der vorliegenden Erfindung ist es daher, die vorstehend beschriebenen Mängel und Nachteile des Standes der Technik zu überwinden und eine verbesserte Filtereinrichtung für einen Staubsauger bereitzustellen, mit der ein Saugbetrieb des Staubsaugers während der Abreinigung des Filters nicht unterbrochen werden muss.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei in einem ersten Aspekt durch eine Filtereinrichtung für einen Staubsauger gelöst, wobei der Staubsauger eine Turbineneinrichtung und einen Motor zum Erzeugen von einem ersten und/oder einem zweiten Hauptluftstrom durch einen Sammelbehälter des Staubsaugers umfasst. Die Filtereinrichtung ist durch die folgenden Merkmale und Komponenten gekennzeichnet:
eine erste Kammer und eine zweite Kammer mit je einem Filterelement und einer Einströmöffnung, wobei ein Ventil dazu eingerichtet ist, die Einströmöffnung zu öffnen oder zu verschließen, wobei in der Kammer ein Unterdruck vorliegt, wenn die Einströmöffnung verschlossen ist und wobei in der Kammer ein atmosphärischer Druck vorliegt, wenn die Einströmöffnung geöffnet ist,
wobei die Kammern ferner je ein Druckstoßelement umfassen,
wobei die Druckstoßelemente in einer Parkposition und in einer Abreinigungsposition vorliegen können,
wobei ein Umschalten zwischen der Parkposition und der Abreinigungsposition durch ein Einlassen des atmosphärischen Drucks erfolgt, das durch eine Betätigung des Ventils bewirkt wird,
wobei die Druckstoßelemente dazu eingerichtet sind, beim Einnehmen der Abreinigungsposition einen Impuls auf das jeweilige Filterelement auszuüben, so dass eine Abreinigung des Filterelements bewirkt wird.

Tests haben gezeigt, dass die vorgeschlagene Filtereinrichtung für eine hohe und unterbrechungsfreie Absaugleistung sorgt. Durch das vorteilhafte Zusammenwirken und die konkrete Ausgestaltung der Ventile und der Druckstoßelemente, sowie die dadurch gesteuerte Druckverteilung in den unterschiedlichen Bereichen des Staubsaugers kann eine abwechselnde Abreinigung der zwei Kammern bei gleichzeitig fortgeführtem Saugbetrieb der jeweils anderen Kammer ermöglicht werden. Dadurch wird vorteilhafterweise eine hocheffiziente und bauraumoptimierte Möglichkeit zur Filterabreinigung in einem Staubsauger bereitgestellt. Die vorgeschlagene Filtereinrichtung ist insbesondere vergleichsweise einfach aufgebaut. Anwendungstests haben gezeigt, dass die vorgeschlagene Filtereinrichtung besonders robust und wenig anfällig für Reparaturen und Verschleiß ist. Zu diesen Vorteilen der Erfindung tragen insbesondere die in den Kammern vorgesehenen Druckstoßelemente bei, die vorzugsweise dazu eingerichtet sind, beim Einnehmen der Abreinigungsposition einen Abreinigungsimpuls auf das jeweilige Filterelement auszuüben. Dieser Abreinigungsimpuls kann im Sinne der Erfindung auch als Rückspül-Impuls bezeichnet werden. Zusätzlich zu dem Rückspül-Impuls wird durch die Öffnung des Ventils eine mechanische Erschütterung des Filterelements bewirkt. Durch die Erschütterung werden Staubpartikel und Filterkuchen von dem Filterelement gelöst und können in den Sammelbehälter des Staubsaugers fallen. Die Erschütterung des Filterelements stellt vorzugsweise eine Rückspülung der Filtereinrichtung dar, die im Kontext der vorliegenden Erfindung eingesetzt wird, um die Filter des Staubsaugers abzureinigen.

Es ist im Sinne der Erfindung bevorzugt, dass die Druckstoßelemente innerhalb der Kammern beweglich ausgebildet sind. In den Kammern können insbesondere Axialführungen vorgesehen sein, entlang derer sich die Druckstoßelement in einer Oben-Unten-Bewegung bewegen können. Eine solche Oben-Unten-Bewegung wird im Sinne der Erfindung bevorzugt als Vertikalbewegung bezeichnet. Der Begriff "Vertikalbewegung" ist im Sinne der Erfindung so zu verstehen, dass eine Bewegung der Druckstoßelemente im Wesentlichen vertikal verläuft, wobei der Fachmann weiß, dass es - beispielsweise bauartbedingt oder aufgrund eines Spiels - zu leichten Abweichungen von der mathematisch exakten Vertikalität kommen kann. Beispielsweise kann die Oben-Unten-Bewegung der Druckstoßelemente um +/- 5 Grad von einer exakten vertikalen Achse abweichen. Die Bewegung der Druckstoßelemente in einer Vertikalrichtung ist mit dem Vorteil verbunden, dass die Bewegung der Druckstoßelemente bei einer Abwärtsbewegung von der Schwerkraft unterstützt wird. Dadurch kann ein besonders starker und wirkungsvoller Abreinigungsimpuls auf die Filter des Stausaugers bewirkt werden.

Die Vorsehung einer ersten und einer zweiten Kammer im Kontext der vorgeschlagenen Filtereinrichtung ist so zu verstehen, dass die Filtereinrichtung vorzugsweise mindestens zwei Kammern aufweist. Es kann im Sinne der Erfindung auch bevorzugt sein, dass die Filtereinrichtung mehr als zwei Kammern aufweist, zum Beispiel drei oder vier Kammern. Es ist im Sinne der Erfindung bevorzugt, dass, wenn die vorgeschlagene Filtereinrichtung zwei Kammern umfasst, die beiden Kammern im Wesentlichen nebeneinander in dem Staubsauger angeordnet vorliegen. Die Kammern können beispielsweise in etwa gleicher Höhe im Staubsammelbehälter des Staubsaugers angeordnet sein.

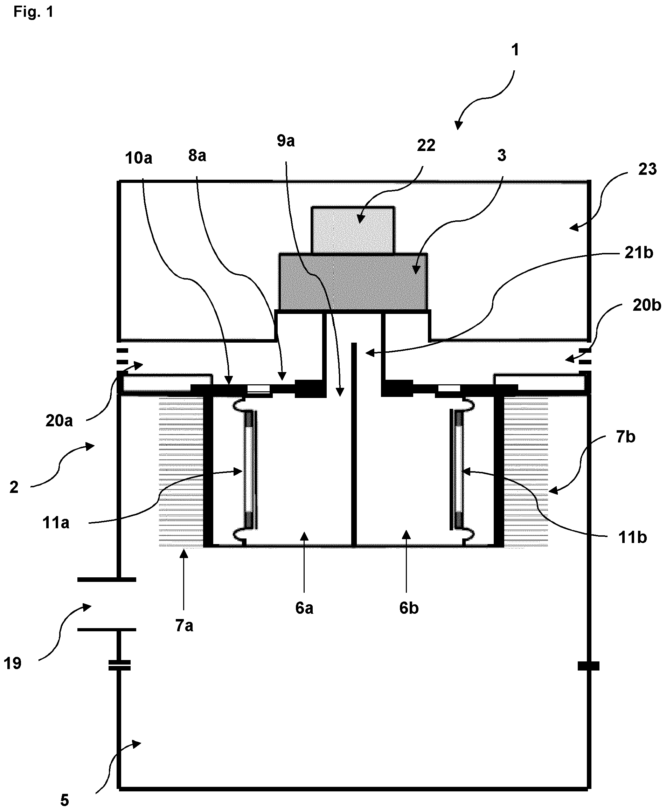

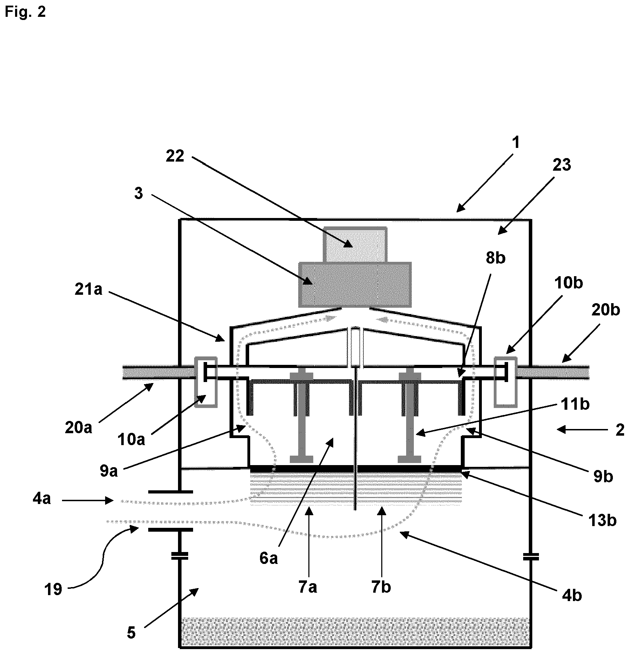

In einer ersten Ausführungsform der Erfindung können die Hauptluftströme seitlich in die Kammern einströmen und anschließend in eine Vertikalströmung umgelenkt werden. Diese Ausführungsform der Erfindung ist beispielsweise in Fig. 1 dargestellt. In einer zweiten Ausführungsform der Erfindung können die Hauptluftströme von unten in die Kammern einströmen und eine Vertikalströmung bilden. In dieser zweiten bevorzugten Ausgestaltung der Erfindung liegen die Kammern und ihre Komponenten quasi um 90 Grad gedreht im Vergleich zu der ersten Ausgestaltung der Erfindung vor. Diese zweite Ausführungsform der Erfindung ist beispielsweise in den Fig. 2 bis 11 dargestellt. Durch diese Anordnung der Filterelemente innerhalb des Staubsaugers kann die Abreinigung der Filter weiter erleichtert werden, weil die Filterfalten nach unten frei sind und so besser abgereinigt werden können.

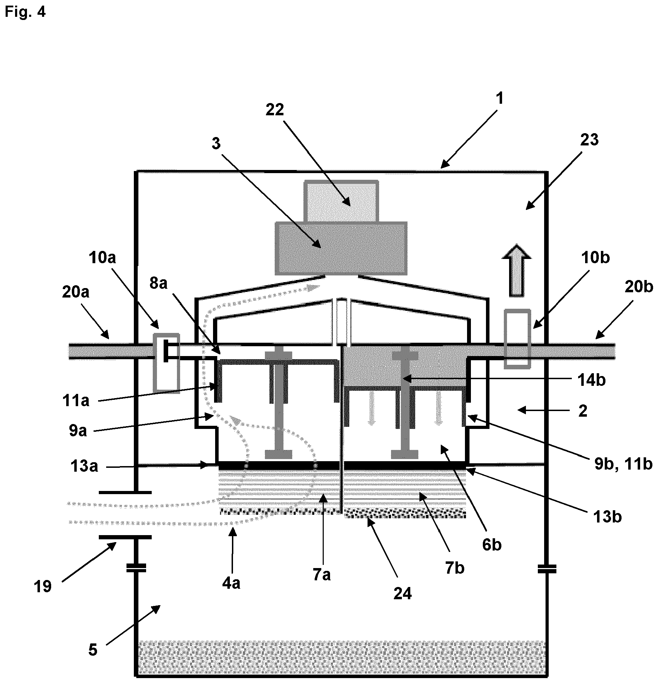

Die Beweglichkeit der Druckstoßelemente bedeutet im Sinne der Erfindung bevorzugt, dass die Druckstoßelemente in zwei verschiedenen Positionen innerhalb der jeweiligen Kammer vorliegen können, und zwar in einer Parkposition oder in einer Abreinigungsposition. Die Druckstoß-elemente könne sich insbesondere von der einen in die andere Position bewegen und auch jede Zwischenposition einnehmen. Die zwei verschiedenen Zustände, in denen die Druckstoßelemente vorliegen können, werden beispielsweise in den Fig. 4 bis 6 verdeutlicht, in der die Druckstoßelemente der Kammern in unterschiedlichen Zuständen vorliegen. In der ersten Kammer des Staubsaugers, die auf der linken Figurenhälfte dargestellt wird, befindet sich das Druckstoßelement in der Saugbetriebsstellung, die im Sinne der Erfindung auch als Parkposition bezeichnet wird. In der zweiten Kammer des Staubsaugers, die auf der rechten Hälfte der Fig. 4 bis 6 dargestellt wird, befindet sich das Druckstoßelement in der Abreinigungsstellung. In dieser Stellung des Druckstoßelements kann eine Abreinigung des Filters der rechten Kammer der vorgeschlagenen Filtereinrichtung stattfinden, während der Saugbetrieb des Staubsaugers über die linke Kammer aufrechterhalten wird.

In der Abreinigungsstellung oder -position sind die Druckstoßelemente dazu eingerichtet sind, die Kammern des Staubsaugers in einen vorderen Raum und einen hinteren Raum aufzuteilen. Die vordere Kammer ist vorzugsweise in räumlicher Nähe zu dem Filterelement der jeweiligen Kammer angeordnet, während der hintere Raum der Kammer bevorzugt mit einem Belüftungskanal verbunden vorliegt. Vorzugsweise weist jede der beiden Kammern einen Belüftungskanal auf, mit dem die Kammer mit der Umgebung des Staubsaugers verbunden vorliegen kann. In dem Belüftungskanal liegt ein Belüftungsventil vor, das im Sinne der Erfindung bevorzugt auch als "Ventil" bezeichnet wird. Das Ventil ist dazu eingerichtet, die jeweilige Kammer des Staubsaugers strömungstechnisch mit der Umgebung des Staubsaugers zu verbinden oder die Verbindung zu verschließen. Mit anderen Worten kann der Belüftungskanale mit dem jeweiligen Belüftungsventil geöffnet oder geschlossen werden. Wenn das Belüftungsventil geschlossen ist, besteht keine fluidische Verbindung zwischen der Kammer und der Staubsauger-Umgebung. Es ist in dieser Stellung des Belüftungsventils insbesondere kein Druckausgleich zwischen der Kammer und der Umgebung des Staubsaugers möglich. Das heißt im Sinne der Erfindung bevorzugt, dass in der Kammer des Staubsaugers vorzugsweise ein Unterdruck vorliegt, während in der Umgebung des Staubsaugers ein atmosphärischer Druck vorliegt. Somit liegt in der Kammer der Unterdruck vor, der von der Turbine des Staubsaugers erzeugt wird, um den Saugbetrieb des Staubsaugers sicherzustellen. Wenn das Belüftungsventil geöffnet ist, kann ein Druckausgleichsstrom durch den Belüftungskanal in den Staubsauger und in die Kammer einströmen, so dass ein Druckausgleich zwischen dem Saugbetrieb-Unterdruck in der zunächst geschlossenen Kammer und dem Atmosphärendruck in der Umgebung des Staubsaugers stattfinden kann. Dieser Druckausgleichsstrom bzw. das Eindringen des atmosphärischen Drucks in die Kammer führt vorteilhafterweise dazu, dass das Druckstoßelement in der Kammer nach unten gedrückt wird. Mit anderen Worten bewirkt der Druckausgleich eine Vertikalbewegung des Druckstoßelements nach unten. Durch diese Vertikalbewegung des Druckstoßelements wird die Luft im vorderen Bereich der Kammer komprimiert und ein Abreinigungsimpuls erzeugt. Ferner kommt es durch die Abwärtsbewegung des Druckstoßelements zu einer mechanischen Erschütterung der Filtereinrichtung. Durch die mechanische Erschütterung und/oder den Abreinigungsimpuls kann sich ein Filterkuchen von dem Filter der abzureinigenden Kammer lösen und in den Staubsammelbehälter des Staubsaugers fallen. Mit anderen Worten kann durch die mechanische Erschütterung, sowie durch den Abreinigungsimpuls eine Abreinigung eines der beiden Filter der vorgeschlagenen Filtereinrichtung bewirkt werden. Diese Filterabreinigung entspricht vorzugsweise einem Rückspülprozess, die vorteilhafterweise zu einer Befreiung des Filters von einem etwaigen Filterkuchen führt. Der Druckausgleichsstrom strömt durch die Einströmöffnung in die erste oder in die zweite Kammer, wobei die Einströmöffnung Übergangsbereiche zwischen den Kammern und den ihnen zugeordneten Belüftungskanälen darstellen. Die Belüftungskanäle liegen über die Einströmöffnungen mit den Kammern verbunden vor und sind vorzugsweise Bestandteil der vorgeschlagenen Filtereinrichtung, sowie des offenbarten Staubsaugers.

Es ist im Sinne der Erfindung bevorzugt, dass die vorgeschlagene Filtereinrichtung Turbinenöffnungen aufweist, die dazu eingerichtet sind, eine Strömungsverbindung zwischen den Kammern der Filtereinrichtung und der Turbineneinrichtung zu ermöglichen. Es ist im Sinne der Erfindung insbesondere bevorzugt, dass die Kammern der Filtereinrichtung je eine Turbinenöffnung umfassen. Die Turbinenöffnungen können vorzugsweise in Seitenwänden der Kammern und/oder in den Axialführungen innerhalb der Kammern vorliegen. Wenn die Turbinenöffnungen in den Axialführungen angeordnet vorliegen, wird durch die Erfindung eine Innenabsaugung durch die innere Axialführung realisiert und es kann auf die seitlichen Turbinenkanäle verzichtet werden. Dadurch kann die Herstellung der vorgeschlagenen Filtereinrichtung weiter vereinfacht werden. Die inneren Axialführungen mit Turbinenöffnungen können vorzugsweise von einem Rohr mit seitlichen Öffnungsschlitzen gebildet werden. Es ist im Sinne der Erfindung bevorzugt, dass die Turbinenöffnungen durch den Positionswechsel des Druckstoßelements geschlossen werden. Die Turbineneinrichtung kann im Sinne der Erfindung bevorzugt auch als Saugeinrichtung bezeichnet werden.

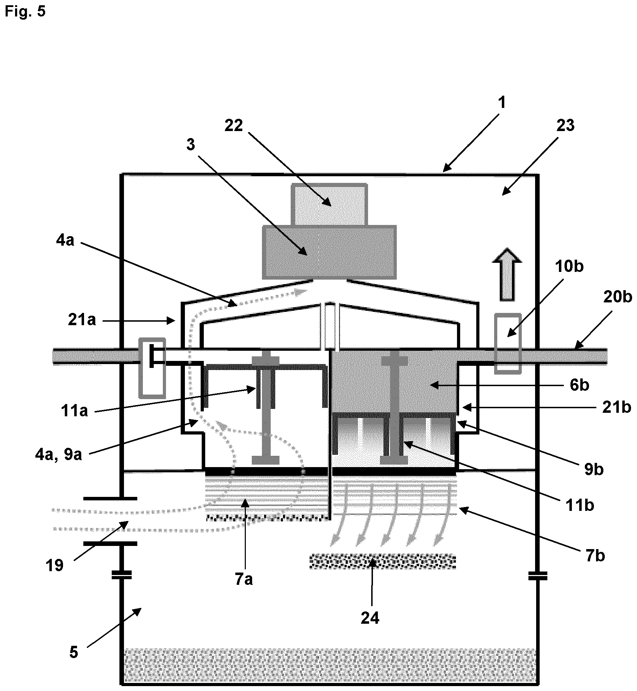

Die vertikale Abwärtsbewegung des Druckstoßelements bei Öffnen des Belüftungsventils führt vorzugsweise auch dazu, dass die Turbinenöffnung in der abzureinigenden Kammer geschlossen wird. Dies kann insbesondere dadurch erfolgen, dass sich das Druckstoßelement oder Teile davon vor die Turbinenöffnung schieben, so dass die Turbinenöffnung verschlossen wird. Dadurch wird die Kammer von dem Turbinen-Saugstrom abgeschnitten, so dass kein Unterdruck mehr in der abzureinigenden Kammer mehr aufgebaut bzw. aufrechterhalten werden kann. In Fig. 5 ist beispielsweise die Turbinenöffnung der rechten Kammer durch das rechte Druckstoßelement geschlossen.

Die Filterabreinigung kann dadurch beendet werden, dass das Belüftungsventil und damit der Belüftungskanal der Kammer mit dem frisch abgereinigten Filter geschlossen wird. Dadurch kann das Druckstoßelement dieser Kammer aus seiner Abreinigungsposition in die Parkposition zurückkehren. Die Rückstellung der Druckstoßelemente kann durch die Vorsehung von Bypass-Kanälen und/oder Druckfedern unterstützt werden. Die Rückkehr des Druckstoßelements von der Abreinigungsposition in die Parkposition führt vorzugsweise dazu, dass in der frisch abgereinigten Kammer erneut ein Unterdruck aufgebaut und ein Saugbetrieb duchgeführt werden kann. Dies wird insbesondere dadurch erreicht, dass das Druckstoßelement bei seiner Rückkehr von der Abreinigungsposition in die Parkposition die Turbinenöffnung in der Kammer wieder freigibt, so dass Luft aus der Kammer durch die Turbine abgesaugt und ein Saugstrom für den Saugbetrieb des Staubsaugers erzeugt werden kann.

Es ist im Sinne der Erfindung bevorzugt, dass der vordere Raum einer Kammer zwischen dem Filterelement und dem Druckstoßelement gebildet wird und der hintere Raum mit dem Belüftungskanal verbunden vorliegt. Die Einströmöffnung der ersten oder der zweiten Kammer können von einem Ventil verschlossen oder freigegeben werden, wobei die entsprechende Kammer abgereinigt werden kann, wenn das Belüftungsventil geöffnet ist, und wobei mit der entsprechenden Kammer ein Saugbetrieb aufrecht erhalten werden kann, wenn das Belüftungsventil geschlossen ist und sich ein Unterdruck in der entsprechenden Kammer aufbauen kann. Mit anderen Worten ist es im Sinne der Erfindung bevorzugt, dass die Belüftungskanäle, die mit je einer der beiden Kammern verbunden vorliegen, ein Ventil umfassen, wobei die Ventile dazu eingerichtet sind, die Einströmöffnung einer Kammer zu öffnen oder zu verschließen.

Es ist im Sinne der Erfindung bevorzugt, dass die Turbinenöffnung dazu eingerichtet ist, eine Strömungsverbindung zwischen einer der Kammern und der Turbine zu ermöglichen, wobei diese Strömungsverbindung zwischen den Kammern und der Turbineneinrichtung insbesondere bei Betrieb des Staubsaugers besteht, d.h. geöffnet ist. Vorzugsweise wird die Strömungsverbindung von einem Strömungskanalabschnitt gebildet, der zwischen der Turbinenöffnung einer der Kammern und der Turbine gebildet wird. Dieser Strömungskanalabschnitt ist insbesondere bei Betrieb des Staubsaugers geöffnet, damit der von der Turbine erzeugte Unterdruck zum Ein- bzw. Aufsaugen von Staub verwendet werden kann. Die Stellung des Druckstoßelements, bei der ein Saugbetrieb durch die jeweilige Kammer ermöglicht wird, wird im Sinne der Erfindung bevorzugt als "erste Stellung", "Parkposition" oder "Saugbetriebsstellung" des Druckstoßelements bezeichnet. In dieser ersten Stellung des Druckstoßelements ist die Turbinenöffnung einer Kammer geöffnet, während die Einströmöffnung zum Belüftungskanal bzw. der Belüftungskanal selbst geschlossen ist. In der zweiten Stellung des Druckstoßelements, die im Sinne der Erfindung auch als Abreinigungsstellung bezeichnet wird, ist die Turbinenöffnung geschlossen, während die Einströmöffnung bzw. der Belüftungskanal geöffnet.

Es ist im Sinne der Erfindung bevorzugt, dass in der entsprechenden Kammer ein Unterdruck vorliegt, wenn die zugehörige Einströmöffnung verschlossen und die Turbinenöffnung geöffnet ist, d.h. das Druckstoßelement der entsprechenden Kammer in der Saugbetriebsstellung oder in der Parkposition vorliegt. In diesem Fall erfolgt durch die entsprechende Kammer ein Absaugbetrieb und Staubpartikel können mit dem zugehörigen Hauptluftstrom in den Sammelbehälter eingesaugt werden. Es ist im Sinne der Erfindung ferner bevorzugt, dass während des Saugbetriebs durch die eine Kammer das Filterelement in der anderen Kammer abgereinigt werden kann. Um die Abreinigung des Filterelements zu bewirken, kann das Ventil der anderen Kammer betätigt werden, so dass die Einströmöffnung geöffnet wird, eine fluidische Verbindung zwischen der abzureinigenden Kammer und der Staubsauger-Umgebung hergestellt wird und es zu einem Druckausgleich in der abzureinigenden Kammer kommen kann. Dabei gelangt ein atmosphärischer Druck in diese abzureinigende Kammer. Durch den Druckausgleich wird das Druckstoßelement in der abzureinigenden Kammer nach unten bewegt, wodurch vorteilhafterweise die Turbinenöffnung dieser Kammer verschlossen wird. Die Druckstoßelemente sind dazu eingerichtet, beim Einnehmen der Abreinigungsposition einen Impuls auf das jeweilige Filterelement auszuüben, so dass eine Abreinigung des Filterelements bewirkt wird. Insbesondere wird ein Abreinigungsstoß oder Abreinigungsimpuls von dem Druckstoßelement auf das Filterelement ausgeübt.

Es ist vorgesehen, dass jede Kammer ein Druckstoßelement umfasst, das in einer Parkposition und in einer Abreinigungsposition vorliegen kann. Ein Umschalten zwischen der Parkposition und der Abreinigungsposition kann vorteilhafterweise durch ein Einlassen des atmosphärischen Drucks erfolgen, wobei das Einlassen durch eine Betätigung des Belüftungsventils im Belüftungskanal des Staubsaugers bewirkt wird. Die Betätigung des Ventils bedeutet im Sinne der Erfindung bevorzugt, dass das Ventil von einer ersten in eine zweite Stellung verschoben wird, oder umgekehrt. Mit anderen Worten wird bei einer Betätigung des Ventils das Ventil von der Saugbetriebsstellung in die Filterabreinigungsstellung gebracht. In der geöffneten Position lassen die Druckstoßelemente die Hauptluftströme, die sich im Saugbetrieb zwischen Staubsammelbehälter und Turbine ausbilden, durch die Turbinenöffnung hindurch. Wenn nun das Belüftungsventil von der Saugbetriebsstellung in die Filterabreinigungsstellung gebracht wird, wird der Unterdruck in der abzureinigenden Kammer geschwächt, wobei der Saugbetrieb der Staubsaugvorrichtung durch die andere Kammer vorteilhafterweise aufrechterhalten werden kann. Die Schwächung des Unterdrucks kann im Sinne der Erfindung dadurch bewirkt werden, dass ein Druckausgleichsstrom aus der Umgebung des Staubsaugers in die abzureinigende Kammer geleitet wird. Dies erfolgt vorzugsweise durch den Belüftungskanal und die Einströmöffnung der entsprechenden Kammern. Das Einlassen des Druckausgleichsstroms führt vorteilhafterweise dazu, dass in der abzureinigenden Kammer kein Unterdruck mehr vorliegt.

Es ist im Sinne der Erfindung bevorzugt, dass durch das Betätigen des Ventils die Einströmöffnung zwischen Kammer und Belüftungskanal geöffnet wird, sowie eine fluidische Verbindung zwischen der abzureinigenden Kammer und der Staubsauger-Umgebung aufgebaut wird, so dass aufgrund des im Saugbetrieb bestehenden Unterdrucks in der Kammer ein Luftstrom ("Druckausgleichsstrom") in die Kammer hinein entsteht, durch den das entsprechende Druckstoßelement nach unten gedrückt wird. Dadurch kann die Turbinenöffnung geschlossen werden und der Hauptluftstrom, der sich im Saugbetrieb zwischen Staubsammelbehälter und Turbine ausbildet, wird von dem Druckstoßelement nicht mehr durchgelassen. Mit anderen Worten blockiert in dieser Filterabreinigungsstellung" das Druckstoßelement einen der beiden Hauptluftströme. Durch den ruckartig durch die geöffnete Einströmöffnung und den Belüftungskanal eindringenden Luftstoß wird nicht nur das Druckstoßelement zu einer im Wesentlichen vertikalen Abwärtsbewegung entlang einer Axialführung veranlasst, sondem auch das Druckstoßelement mit großer Wucht bzw. hoher Beschleunigung in Richtung des Filterelements der entsprechenden Kammer beschleunigt. Diese ruckartige Bewegung des Druckstoßelements wird im Kontext der vorliegenden Erfindung als "Einnehmen der Abreinigungsposition" bezeichnet, wodurch das Druckstoßelement einen Rückspül-Impuls auf das jeweilige Filterelement ausübt. Durch diesen Impuls kann es vorzugsweise zusätzlich zu einer mechanischen Erschütterung des Filterelements kommen, so dass vorteilhafterweise eine mechanische Abreinigung des Filterelements bewirkt wird. Vorzugsweise kann der Impuls durch einen Kontakt zwischen Teilungs- und Filterelement oder aber auch kontaktlos durch eine Komprimierung der Luft zwischen den Elementen übertragen werden.

Es ist im Sinne der Erfindung bevorzugt, dass zwischen dem Druckstoßelement und dem Filterelement ein mechanischer Anschlag vorgesehen ist. Dieser Anschlag kann beispielsweise als Gitter oder als Gitterelement ausgebildet sein. Vorzugsweise ist der mechanische Anschlag dazu eingerichtet, einen Stoß-Impuls bzw. den Rückspül-Impuls auf das Filterelement zu übertragen.

Es ist im Sinne der Erfindung bevorzugt, dass der Sammelbehälter den unteren Bereich des Staubsaugers bildet, in dem der von dem Staubsauger eingesaugte Staub aufgefangen und bis zu einer Leerung des Staubsaugers aufbewahrt wird. Vorzugsweise sind die erste und die zweite Kammer des Staubsaugers Bestandteil des Sammelbehälters. Mit anderen Worten liegen die erste Kammer und die zweite Kammer in dem Sammelbehälter des Staubsaugers angeordnet vor. In einer bevorzugten Ausgestaltung der Erfindung weisen die Kammern Einlassöffnungen auf, die gegenüber dem Sammelbehälter mit Filterelementen abgegrenzt sind. Vorzugsweise sind die Filterelemente dazu eingerichtet, die Einlassöffnungen so zu verschließen, dass Staubpartikel aus den Hauptluftströmen herausgefiltert werden können, wobei sich die Hauptluftströme im Saugbetrieb zwischen dem Saugschlaucheinlass des Staubsammelbehälters und der Turbine ausbilden. Es sind diese Filterelemente zwischen den Kammern und dem restlichen Volumen des Sammelbehälters, die im Kontext der vorliegenden Erfindung abgereinigt werden sollen. Durch die bevorzugt direkte und unmittelbare Verbindung zwischen den Filterelementen und dem Sammelbehälter können Staubpartikel und Filterkuchen, die bei der Abreinigung von den Filterelementen gelöst werden, direkt in den Sammelbehälter gelangen und bei der nächsten Leerung des Behälters entsorgt werden.

Der Saugerkopf bildet vorzugsweise den oberen Bereich des Staubsaugers; er wird vorzugsweise auch als "Staubsauger-Kopf" bezeichnet. Der Saugerkopf umfasst vorzugsweise die Turbineneinrichtung des Staubsaugers, sowie einen Motor. Es ist im Sinne der Erfindung bevorzugt, dass die Turbine Bestandteil einer Absaugeinrichtung innerhalb des Staubsaugers ist. Der Motor dient zum Antrieb der Turbine bzw. um den Betrieb des Staubsaugers zu ermöglichen. Der Staubsauger kann Belüftungskanäle umfassen, die beispielsweise zwischen dem Saugerkopf und dem Sammelbehälter angeordnet vorliegen können. Es kann im Sinne der Erfindung auch bevorzugt sein, dass die Belüftungskanäle im Saugerkopf angeordnet vorliegen. Die Belüftungskanäle können vorzugsweise Lüftungsöffnungen oder Lüftungsschlitze aufweisen, durch die Luft in das Innere des Staubsaugers eingesaugt werden kann. Es ist im Sinne der Erfindung insbesondere bevorzugt, dass die Luft in die Belüftungskanäle eingesaugt wird, wobei die Luft von dort in die Kammern der vorgeschlagenen Filtereinrichtung gelangen kann, wenn die entsprechenden Belüftungsventile geöffnet werden bzw. die Einströmöffnungen der Kammern freigeben. Der Luftstrom von dem Belüftungskanal in die abzureinigende Kammer bildet in einer besonders bevorzugten Ausgestaltung der Erfindung einen Druckausgleichsstrom, der durch das geöffnete Ventil und durch die Einströmöffnung von dem Belüftungskanal in die Kammer gelangen kann. Mit anderem Worten kann bei Öffnen des ersten oder zweiten Ventils ein Druckausgleichsstrom in die erste Kammer oder in die zweite Kammer des Staubsaugers gelangen. Es ist im Sinne der Erfindung bevorzugt, dass die Ventile mit je einem Stellelement verschoben, d.h. geöffnet oder geschlossen, werden können. Die Stellelemente können beispielsweise in den Belüftungskanälen vorliegen, vorzugsweise in räumlicher Nähe zu einer weiteren Seitenwand, die vorzugsweise eine Trennwand zwischen dem Belüftungskanal und der ersten oder der zweiten Kammer des Staubsaugers bildet.

Es ist im Sinne der Erfindung bevorzugt, dass bei Betrieb des Staubsaugers in dem Sammelbehälter und in mindestens einer der beiden Kammern ein Unterdruck herrscht. Vorzugsweise kann der Unterdruck von der Turbineneinrichtung im Saugerkopf erzeugt werden. Mit Hilfe des Unterdrucks können Staubpartikel oder Bohrmehl in das Innere des Staubsaugers eingesaugt werden. Der Sammelbehälter des Staubsaugers weist vorzugsweise einen Saugerschlauch-Einlass auf, durch den die Staubpartikel oder das Bohrmehl eingesaugt werden kann, insbesondere wenn der Einlass mit einem Saugerschlauch verbunden ist und der Staubsauger im Saugbetrieb betrieben wird. Der Saugbetrieb ist vorzugsweise dadurch gekennzeichnet, dass der Staubsauger mit seiner Turbineneinrichtung einen Unterdruck erzeugt. Durch den Saugbetrieb werden Hauptluftströme durch die Kammern des Staubsaugers, die am Saugbetrieb teilnehmen, erzeugt, wobei die Hauptluftströme vorzugsweise von dem Saugerschlauch-Einlass zu der Turbineneinrichtung strömen. Der erste Hauptluftstrom gelangt durch den Saugerschlauch-Einlass in den Sammelbehälter und strömt durch das erste Filterelement in den vorderen Bereich der ersten Kammer. Wenn die erste Kammer am Saugbetrieb des Staubsaugers teilnimmt, ist der Belüftungskanal der ersten Kammer von dem Belüftungsventil verschlossen (Saugbetriebsstellung des Ventils). Es ist im Sinne der Erfindung bevorzugt, dass die am Saugbetrieb teilnehmenden Kammern in Strömungsverbindung mit der Turbineneinrichtung des Staubsaugers stehen. Dazu umfassen die Kammern je eine Turbinenöffnung, , die eine Strömungsverbindung zwischen den Kammern und der Turbineneirichtung ermöglicht. Es ist im Sinne der Erfindung bevorzugt, dass diese Turbinenöffnung von dem Druckstoßelement geöffnet, d.h. freigegeben, oder geschlossen werden kann.

Es ist im Sinne der Erfindung bevorzugt, dass die Kammern jeweils eine Einströmöffnung und eine Turbinenöffnung umfassen, wobei die Turbinenöffnungen dazu eingerichtet sind, eine Strömungsverbindung zwischen den Kammern und der Turbineneinrichtung zu ermöglichen und die Einströmöffnung den Übergang zwischen den Kammern und den jeweiligen Belüftungskanälen bildet.

In einem Ausführungsbeispiel der Erfindung ist es bevorzugt, dass in einer Staubsaugvorrichtung
- eine erste Kammer ein erstes Filterelement und eine erste Einströmöffnung umfasst, wobei die erste Einströmöffnung mit einem ersten Belüftungsventil gegenüber einem ersten Belüftungskanal verschließbar ist, wobei die erste Kammer ferner ein erstes Druckstoßelement umfasst; sowie
- eine zweite Kammer ein zweites Filterelement und eine zweite Einströmöffnung umfasst, wobei die zweite Einströmöffnung mit einem zweiten Belüftungsventil gegenüber einem zweiten Belüftungskanal verschließbar ist, wobei die zweite Kammer ferner ein zweites Druckstoßelement umfasst,
- wobei das Druckstoßelement bzw. das Belüftungsventil in einer Parkposition und in einer Abreinigungsposition vorliegen können, wobei ein Umschalten zwischen der Parkposition und der Abreinigungsposition des Druckstoßelements durch einen atmosphärischen Druck erfolgt, der durch ein Öffnen des ersten Ventils oder des zweiten Ventils in der ersten Kammer oder in der zweiten Kammer erzeugbar ist, wobei die Druckstoßelemente dazu eingerichtet sind, beim Einnehmen der Abreinigungsposition einen Rückspül-Impuls auf das jeweilige Filterelement auszuüben, so dass eine Rückspülluftbewegung und eine etwaige zusätzliche mechanische Erschütterung und dadurch eine Abreinigung des jeweiligen Filterelements bewirkt wird.

In einem zweiten Aspekt betrifft die Erfindung ein Verfahren zum Abreinigen einer Filtereinrichtung in einem Staubsauger, wobei das Verfahren durch die folgenden Schritte gekennzeichnet ist:
a) Bereitstellung einer vorgeschlagenen Filtereinrichtung in einem Staubsauger,
b) Betrieb des Staubsaugers, wobei bei Betrieb des Staubsaugers in einem Sammelbehälter des Staubsaugers und in mindestens einer ersten Kammer und/oder in einer zweiten Kammer des Staubsaugers ein Unterdruck herrscht,
c) Erzeugung eines atmosphärischer Druck in einer der Kammern durch Betätigung eines Ventils, wobei durch die Betätigung des Ventils eine Einströmöffnung der Kammer geöffnet wird und ein Positionswechsel eines Druckstoßelements innerhalb der Kammer von einer Parkposition in eine Abreinigungsposition bewirkt wird,
d) Abreinigung eines Filterelements durch den Positionswechsel des Druckstoßelements.

Es ist im Sinne der Erfindung bevorzugt, dass der Positionswechsel des Druckstoßelements vorzugsweise auch als Stellungswechsel, Positionsänderung oder als Umschalten von einer ersten in eine zweite Position bezeichnet werden kann. Dieser Positionswechsel erfolgt vorzugsweise schlag- oder ruckartig, so dass das Druckstoßelement mit einem großen Impuls bewegt wird. Bei dieser Bewegung handelt es sich vorzugsweise um eine schlag- oder ruckartige Abwärtsbewegung des Druckstoßelements, die im Sinne der Erfindung bevorzugt auch als "Vertikalbewegung" bezeichnet wird.

Es ist im Sinne der Erfindung bevorzugt, dass durch eine Betätigung des Belüftungsventils der Unterdruck aus einer der beiden Kammern verdrängt wird, indem die Einströmöffnung freigegeben wird. Dadurch kann atmosphärischer Druck aus der Umgebung des Staubsaugers in die zu belüftende Kammer einströmen. Es ist im Sinne der Erfindung bevorzugt, dass durch den Positionswechsel des Druckstoßelements auch die Turbinenöffnungen der Kammern geschlossen werden. Durch diese Druckänderung, die vorzugsweise einen Druckausgleich in Bezug auf den in der Umgebung des Staubsaugers herrschenden Druck darstellt, kann vorteilhafterweise eine Positionsänderung des Druckstoßelements bewirkt werden, die ergänzend oder zusätzlich zu dem Rückspül-Impuls zu einer mechanischen Erschütterung des Filterelements und zu einer Abreinigung der Filtereinrichtung führt.

Es ist im Sinne der Erfindung bevorzugt, dass die Filterelemente der Filtereinrichtung abwechselnd abgereinigt werden können. Die jeweils andere Kammer stellt vorteilhafterweise den Saugbetrieb des Staubsaugers sicher. Vorzugsweise können die Filterabreinigungsvorgänge im Wesentlichen nahtlos, d.h. ohne Pause und Zeitversatz, erfolgen. Es kann allerdings im Sinne der Erfindung auch bevorzugt sein, dass Pausen zwischen den Filterabreinigungsvorgängen der Kammern eingelegt werden. In diesen Pausen ist es bevorzugt, dass beide Kammern am Saugbetrieb des Staubsaugers teilnehmen.

Es ist im Sinne der Erfindung bevorzugt, dass bei Öffnen der Einströmöffnung durch das Öffnen der Belüftungsventile ein Druckausgleichsstrom in die erste Kammer oder in die zweite Kammer gelangt, wodurch sich in der entsprechenden Kammer ein atmosphärischer Druck ausbreitet. Es ist im Sinne der Erfindung darüber hinaus bevorzugt, dass der Druckausgleichsstrom aus einem Belüftungskanal eingesaugt wird, wobei der Belüftungskanal Belüftungsöffnungen oder -schlitze in Richtung Umgebung des Staubsaugers aufweisen kann. Durch diese Belüftungsöffnungen oder -schlitze des Belüftungskanals kann vorzugsweise Luft aus der Umgebung des Staubsaugers eingesaugt werden, wenn das Belüftungsventil im Belüftungskanal, sowie die Einströmöffnung der abzureinigenden Kammer geöffnet sind. Die eingesaugte Luft bildet vorzugsweise den Druckausgleichsstrom, der das entsprechende Druckstoßelement zu seiner Abwärtsbewegung veranlasst.

Es ist im Sinne der Erfindung bevorzugt, dass bei Betrieb des Staubsaugers eine Strömungsverbindung zwischen den Kammern und der Turbineneinrichtung besteht, wobei die Strömungsverbindung einen Strömungskanalabschnitt darstellt, der zwischen einer Turbinenöffnung einer der Kammern und der Turbineneinrichtung gebildet wird. Es ist im Sinne der Erfindung bevorzugt, dass der erste Hauptluftstrom und/oder der zweite Hauptluftstrom durch diese Strömungsverbindung strömen kann.

Es stellt einen wesentlichen Vorteil der Erfindung dar, dass die Abreinigung des Filterelements der einen Kammer bei fortgesetztem Saugbetrieb durch die andere Kammer erfolgen kann.

Insbesondere betrifft die Erfindung auch einen Staubsauger mit einer erfindungsgemäßen Filtereinrichtung. Die für die vorgeschlagene Filtereinrichtung beschriebenen Definitionen, technischen Wirkungen und Vorteile gelten für das vorgeschlagene Filterabreinigungsverfahren und den Staubsauger, der eine vorgeschlagene Filtereinrichtung aufweist, analog.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Seitenansicht eines Staubsaugers mit einer bevorzugten Ausführungsform der vorgeschlagenen Filtereinrichtung mit seitlich einströmenden Hauptluftströmen
- Fig. 2: schematische Darstellung des Staubsaugers, während beide Kammern am Saugbetrieb teilnehmen
- Fig. 3: schematische Darstellung des Staubsaugers zu Beginn derFilterabreinigung der zweiten Kammer
- Fig. 4: schematische Darstellung des Staubsaugers, während das Filterelement der zweiten Kammer abgereinigt wird
- Fig. 5: schematische Darstellung des Staubsaugers, während das Filterelement der zweiten Kammer abgereinigt wird
- Fig. 6: schematische Darstellung des Staubsaugers am Ende des Abreinigungsvorgangs der zweiten Kammer
- Fig. 7: schematische Darstellung des Staubsaugerszu Beginn der Filterabreinigung der ersten Kammer Fig. 8 schematische Darstellung des Staubsaugers, während das Filterelement der ersten Kammer abgereinigt wird
- Fig. 9: schematische Darstellung des Staubsaugers am Ende des Abreinigungsvorgangs der ersten Kammer
- Fig. 10: schematische Seitenansicht eines Staubsaugers bei der Rückstellung der Druckstoßelemente
- Fig. 11: schematische Seitenansicht eines Staubsaugers mit einer bevorzugten Ausführungsform der vorgeschlagenen Filtereinrichtung in horizontaler Anordnung
- Fig. 12: schematische Darstellung des Staubsaugers, während beide Kammern am Saugbetrieb teilnehmen, wobei die Turbinenöffnungen in den Axialführungen vorliegen

### Ausführungsbeispiele und Figurenbeschreibung:

Fig. 1 zeigt eine Seitenansicht eines Staubsaugers 1 mit einer bevorzugten Ausführungsform der vorgeschlagenen Filtereinrichtung 2 in vertikaler Anordnung. Die Formulierung «vertikale Anordnung» bedeutet im Sinne der Erfindung bevorzugt, dass ein Hauptluftstrom 4a, 4b zunächst in seitlich in die Kammern 6a, 6b einströmt, bevor der Hauptluftstrom 4a, 4b in den Kammern 6a, 6b umgelenkt wird, so dass er vorzugsweise in eine Raumrichtung nach oben, d.h. bevorzugt in Richtung der Turbine 3 des Staubsaugers 1, strömt. In einem unteren Bereich des Staubsaugers 1 ist der Staubsammelbehälter 5 dargestellt, der einen Saugschlauch-Einlass 19 aufweist. An diesen Saugschlauch-Einlass 19 kann ein Saugschlauch angeschlossen werden, der beispielsweise mit einer Bodendüse verbunden sein kann. Durch den Saugschlauch können Staubpartikel oder Bohrmehl eingesaugt werden. Der eingesaugte Staub gelangt dann durch den Saugschlauch-Einlass 19 in den Staubsammelbehälter 5 des Staubsaugers 1.

Der obere Bereich des Staubsaugers 1 wird von einem Staubsauger-Kopf 23 gebildet. In dem Staubsauger-Kopf liegen beispielsweise die Turbine 3 und der Motor 22 vor, mit denen der Unterdruck zum Einsaugen der Staubpartikel und des Bohrmehls erzeugt wird. Der Staubsauger 1 weist Belüftungskanäle 20a,20b auf, mit denen Luft aus der Umgebung des Staubsaugers 1 durch Öffnungen im Gehäuse eingesaugt werden kann. Diese durch die Belüftungskanäle 20, 20b eingesaugte Luft kann beispielsweise einen Druckausgleichsstrom bilden, wenn in dem Staubsauger 1 bzw, seinen Kammern 6a, 6b, ein Druckausgleich stattfinden soll. Dies kann beispielsweise der Fall sein, wenn der Unterdruck innerhalb einer Kammer 6a, 6b des Staubsaugers 1 unterbrochen werden soll, um einen Filterabreinigung durchzuführen. Eine Abreinigung der Filterelemente 7a, 7b ist beispielsweise dann vonnöten, wenn die Filterelemente 7a, 7b der vorgeschlagenen Filtereinrichtung 2 mit Staub zugesetzt sind. Der zunächst lose Staub kann zu einem Filterkuchen 24 zusammenbacken, der nur schwer aus den Filterelementen 7a, 7b gelöst werden kann. Um eine wirkungsvolle Filterabreinigung bereitzustellen, bei der insbesondere der Saugbetrieb des Staubsaugers 1 nicht unterbrochen werden muss, wird im Folgenden die Erfindung vorgestellt:

Zwischen dem Staubsammelbehälter 5 und dem Staubsauger-Kopf 23 sind zwei Kammern 6a, 6b vorgesehen, deren Filter 7a, 7b erfindungsgemäß abwechselnd abgereinigt werden können, während in der jeweils anderen Kammer 6a, 6b der Saugbetrieb des Staubsaugers 1 fortgesetzt werden kann. Die Kammern 6a, 6b sind im Wesentlichen gleich ausgebildet, beispielsweise achsensymmetrisch zu einer die beiden Kammern trennenden Trennwand, so dass im Folgenden insbesondere die erste Kammer 6a beschrieben wird. Dabei handelt es sich um die linke Kammer in den Figuren. Strömungstechnisch in einem vorderen Bereich der Kammer 6a befindet sich eine Einlassöffnung 13a, durch die der staubbeladene Luftstrom 4a vom Staubsammelbehälter 5 in Richtung der Turbine 3 gesaugt wird. Um die Turbine 3 vor dem Staub zu schützen, ist vor der Einströmungsöffnung 13a ein Filterelement 7a vorgesehen, das dazu eingerichtet ist, einen wesentlichen Anteil des Staubes aus dem Luftstrom 4a herauszufiltern. Es ist im Sinne der Erfindung bevorzugt, dass die Filterelemente 7a, 7b aus zwei separaten Filtern bestehen können. Die Filterelemente 7a, 7b können alternativ von einem Filter gebildet werden, der in zwei Filterelemente unterteilt ist. Nachdem der Luftstrom 4a die Einlassöffnung 13a und das Filterelement 7a passiert hat, gelangt der Luftstrom 4a in einen vorderen Raum der ersten Kammer 6a. In der ersten Kammer 6a ist ein Druckstoßelement 11a vorgesehen. Das Druckstoßelement 11akann in zwei Zuständen vorliegen, wobei das Druckstoßelement 11a während des Saugbetriebs der ersten Kammer 6a vorzugsweise in einer Parkposition vorliegt. Die Parkposition des ersten Druckstoßelements 11a ist insbesondere dadurch gekennzeichnet, dass eine Turbinenöffnung 9a der ersten Kammer 6a freigegeben wird, so dass der Hauptluftstrom 4a von der ersten Kammer 6a in den Strömungskanalabschnitt 21 gelangen bzw. gesaugt werden kann. Die Druckstoßelemente 11a, 11b können von Axialführungen 14a, 14b geführt werden, so dass eine im Wesentlichen vertikal verlaufende Auf- und Abbewegung der Druckstoßelemente 11a, 11b ermöglicht wird.

Der hintere Raum der ersten Kammer 6a weist eine Einströmöffnung 8a auf, die in einen ersten Belüftungskanal 20a mündet. Der Belüftungskanal 20a weist Belüftungsöffnungen oder -schlitze auf, über die Luft aus der Umgebung des Staubsaugers in den Belüftungskanal 20a einströmen kann. Um dies zu ermöglichen, ist in dem Belüftungskanal 20a ein erstes Ventil 10a vorgesehen, mit denen die Belüftungsöffnungen oder -schlitze des Belüftungskanals 20a geöffnet oder geschlossen werden können. Wenn das Ventil 10a im Belüftungskanal 20a geöffnet ist, wird im Sinne der Erfindung bevorzugt von der Filterabreinigungsstellung gesprochen, während das Ventil 10a im geschlossenen Zustand in der Saugbetriebsstellung vorliegt.

In Fig. 2 sind auch die Turbinenöffnungen 9a, 9b zu sehen, die vorzugsweise Bestandteil der vorgeschlagenen Filtereinrichtung 2 sind. Die Turbinenöffnungen 9a, 9b können in Seitenwänden der Kammern 6a, 6b vorliegen. Diese Ausgestaltung der Erfindung ist in Fig. 2 dargestellt. Die Turbinenöffnungen 9a, 9b können aber auch in den Axialführungen 14a, 14b vorliegen, die dazu eingerichtet sind, die Bewegung der Druckstoßelemente 11 zu führen. In diesem Fall wird eine Innenabsaugung realisiert und bei der Konstruktion der Filtereinrichtung 2 kann auf äußere Turbinenkanäle, wie beispielsweise den Strömungskanalabschnitt 21, verzichtet werden. Dies erleichtert und vereinfacht die Herstellung der vorgeschlagenen Filtereinrichtung 2.

Während des Saugbetriebs der ersten Kammer 6a - wie zum Beispiel abgebildet in den Fig. 4 und5 - ist das Ventil 10a so eingestellt, dass eine Turbinenöffnung 9a der ersten Kammer 6a geöffnet ist. Durch die offenstehende Turbinenöffnung 9a besteht eine Strömungsverbindung zwischen der ersten Kammer 6a und der Turbine 3. Dadurch liegt in der ersten Kammer 6a, sowie im gesamten Staubsammelbehälter 5 des Staubsaugers 1 ein Unterdruck vor, so dass Staub durch den Saugschlauch-Einlass 19 in das Innere des Staubsaugers gesaugt werden kann. Insbesondere kann durch die geöffnete Turbinenöffnung 9a der Luftstrom 4a in den Bereich der Turbine 3 gelangen. Dazu kann der Luftstrom 4a durch einen Strömungskanalabschnitt 21a fließen, der zwischen der Turbinenöffnung 9a und der Turbine 3 vorgesehen ist.

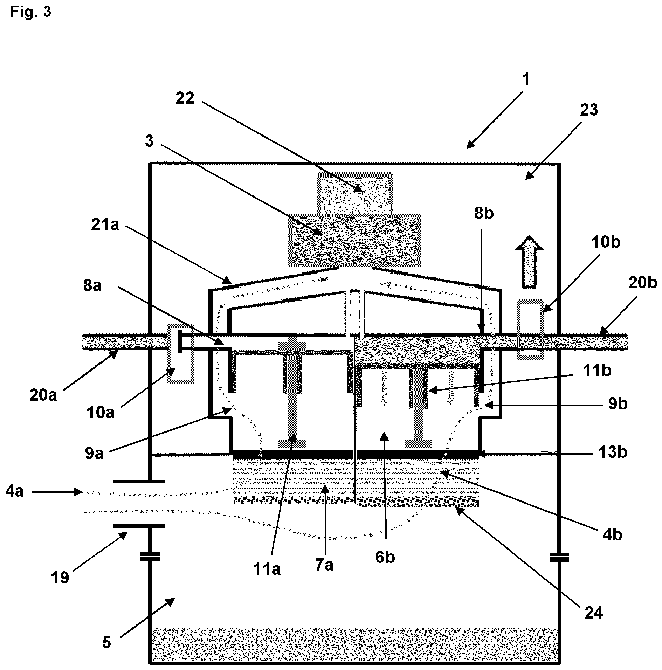

Figuren 2 und 3zeigen eine schematische Darstellung des Staubsaugers 1, während beide Kammern 6a, 6b am Saugbetrieb teilnehmen. Die dunklen Bereiche in den Fig.3 bis 5, 7 und 8 sollen die Bereiche des Staubsaugers 1 darstellen, in denen atmosphärischer Druck herrscht. In dem in Fig. 2 dargestellten Ausführungsbeispiel der Erfindung stehen beide Ventile 10a, 10b des Staubsaugers 1 in der Saugbetriebsstellung und die Druckstoßelemente 11a, 11b der beiden Kammern 6a, 6b liegen jeweils in der Parkposition vor, so dass die Luftströme 4a und 4b vom Staubsammelbehälter 5 durch die Filterelemente 7a, 7b in Richtung Turbine 3 strömen können. Dabei fließen die Hauptluftströme 4a, 4b an den Druckstoßelementen vorbei und gelangen ungehindert in die Strömungskanalabschnitte 21a, 21b.

Der Saugbetriebsmodus des Staubsaugers 1 ist insbesondere dadurch gekennzeichnet, dass im Staubsammelbehälter 5 und in den Kammern 6a, 6b, die am Saugbetrieb teilnehmen, ein Unterdruck herrscht. Dieser Unterdruck herrscht auch in den Strömungskanalabschnitten 21a, 21b der am Saugbetrieb teilnehmenden Kammern 6a, 6b. Der Unterdruck wird von der Turbine 3 und dem Motor 22 erzeugt und er ist ursächlich für die Ausbildung der Luftströme 4a und 4b, die das Einsaugen von Luft und Staub in den Staubsauger 1 ermöglichen.

Durch den Saugbetrieb des Staubsaugers 1 können sich die Filterelemente 7a, 7b mit Staub zusetzen, so dass die Filterleistung reduziert wird. Dies kann eine Gefahr für den Motor 22 und die Turbine 3 darstellen, wenn diese Komponenten des Staubsaugers 1 einem Zuviel an Staub ausgesetzt werden. Daher werden die Filterelemente 7a, 7b der vorgeschlagenen Filtereinrichtung 2 regelmäßig abgereinigt, so dass beispielsweise festgebackener Filterkuchen 24 von den Filterelementen 7a, 7b gelöst werden kann. Dazu wird in einer der beiden Kammern 6a, 6b ein Filterabreinigungsvorgang initiiert. Der Start einer Filterabreinigung der zweiten Kammer 6b wird ab Fig. 3 dargestellt.

Im Folgenden wird ein Filterabreinigungsvorgang der zweiten Kammer 6b des Staubsaugers 1 bzw. des Filterelements 7b der zweiten Kammer 6b des Staubsaugers 1 beschrieben. Die zweite Kammer 6b ist in den Figuren auf der rechten Seite des Staubsaugers 1 abgebildet. Der Filterabreinigigungsvorgang wird durch eine Betätigung des Ventils 10b gestartet, das beispielsweise von der Saugbetriebsstellung in die Filterabreinigungsstellung verschoben werden kann. Das Öffnen des Belüftungsventils 10b wird in Fig. 3 durch den umrandeten Pfeil nach oben oberhalb des Ventils 10b symbolisiert. Durch die Betätigung des Ventils 10b öffnet sich der Belüftungskanal 20b der zweiten Kammer 6b bzw. die Einströmöffnung 8b der zweiten Kammer 6b, und ein Druckausgleichsstrom kann in die zweite Kammer 6b strömen. Der Druckausgleichsstrom wird vorzugsweise von Luft gebildet, die durch die Belüftungsöffnungen und -schlitze in den zweiten Belüftungskanal 20b eingesaugt wird, wobei diese Luft durch die Einströmöffnung 8b in die zweite Kammer 6b des Staubsaugers 1 gelangen kann. Der Druckausgleichsstrom sorgt vorzugsweise dafür, dass in der zweiten Kammer 6b ein Druckausgleich erfolgt, d.h. der herrschende Unterdruck bricht zusammen und wird durch den in der Umgebung des Staubsaugers 1 vorherrschenden atmosphärischen Druck verdrängt. Durch das Eindringen des atmosphärischen Drucks wird das Druckstoßelement 11b in der zweiten Kammer 6b zu einer Abwärtsbewegung veranlasst. Die Abwärtsbewegung des Druckstoßelements 11b wird durch die dunklen Pfeile ohne Umrandung unterhalb des Druckstoßelements 11b dargestellt. Dabei zeigen die beiden Pfeile nach unten, d.h. in Richtung der Abwärtsbewegung des Druckstoßelements 11b. Die genannten Pfeile sind auch in Fig. 4 enthalten. Mit anderen Worten bewegt sich das zweite Druckstoßelement 11b nach unten und führt eine Vertikalbewegung aus. Durch diese im Wesentlichen vertikale Abwärtsbewegung kann die Luft, die zwischen dem Druckstoßelement 11b und dem Filterelement 7b verblieben war, komprimiert werden. Dadurch wird ein Abreinigungsimpuls erzeugt, der vorteilhafterweise auf das Filterelement 7b wirkt und dieses in dem Sinne abreinigt, dass Filterkuchen 24 gelöst wird und in den Staubsammelbehälter 5 des Staubsaugers 1 fallen kann. Darüber hinaus kann es zu einer mechanischen Erschütterung des Filters 7b durch das Druckstoßelement 11b kommen, wodurch die Abreinigung des Filters 7b noch wirkungsvoller wird. Es ist im Sinne der Erfindung bevorzugt, dass Teile der Druckstoß-elemente 11a, 11b eine Breite der Kammern 6a, 6b im Wesentlichen vollflächig ausfüllen, so dass die Druckstoßelemente 11a, 11b besonders gut und wirkungsvoll durch den eindringenden Druckausgleichsstrom nach unten gedrückt werden.

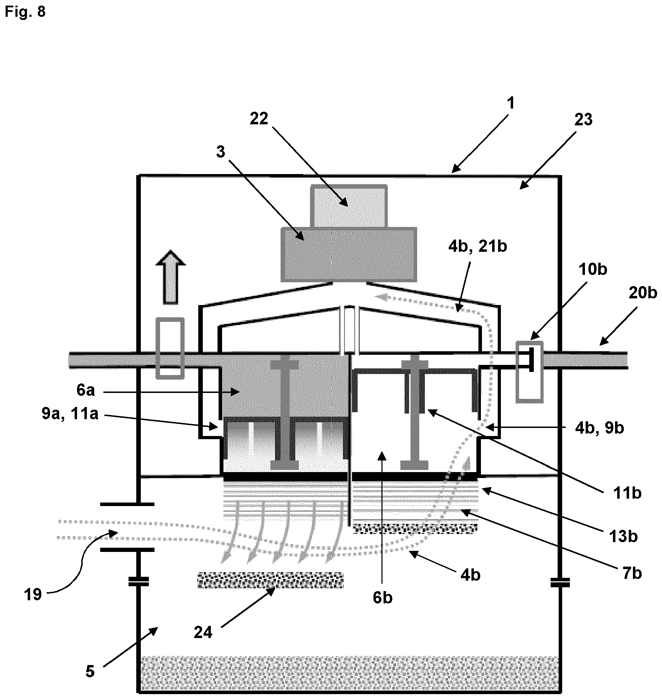

Es ist im Sinne der Erfindung bevorzugt, dass die Einströmöffnung 8b fluidisch leitend mit dem zweiten Belüftungskanal 20b verbunden ist, der durch Belüftungsöffnungen und -schlitze in strömungsleitender Verbindung mit der Umgebung des Staubsaugers 1 steht. Durch diese fluide Verbindung zwischen der Auströmöffnung 8b und der Umgebung des Staubsaugers 1 kann ein Druckausgleichsluftstrom durch die Einströmöffnung 8b in die zweite Kammer 6b gelangen, so dass es zu einer wesentlichen Schwächung des Unterdrucks in der zweiten Kammer 6b kommt. Der Druckausgleichsluftstrom verläuft von der Umgebung des Staubsaugers durch den Belüftungskanal 20b der zweiten Kammer 6b in die zweite Kammer 6b. Der Druckausgleichsluftstrom sorgt in der zweiten Kammer 6b dafür, dass sich das Druckstoßelement 11b nach unten bewegt und dadurch die Abreinigung des Filters 7b bewirkt.. Durch die Abwärtsbewegung des Druckstoßelements 11b kann es zu einer massiven, mechanischen Erschütterung des Filterelements 7b kommen, wobei eine Intensität des Stoßes so eingestellt ist, dass ein etwaiger festgebackener Filterkuchen 24 von dem Filterelement 7b gelöst werden kann. Darüber hinaus kann auch loser Staub, der in dem Filterelement 7b sitzt, durch die mechanische Erschütterung abgeschüttelt werden. Wie in den Fig. 5 und 8 dargestellt, fällt der abgelöste Filterkuchen 24 in den Staubsammelbehälter 5, so dass er später zusammen mit dem übrigen eingesaugten Staub entsorgt werden kann. In den Fig. 4 und 5 ist zu sehen, dass während der Abreinigung des Filterelements 7b in der zweiten Kammer 6b des Staubsaugers 1 der Luftstrom 4b blockiert ist, während der Luftstrom 4a durch die erste Kammer 6a des Staubsaugers 1 weiter fließen kann.

Es kann im Sinne der Erfindung auch vorgesehen sein, dass die Übertragung des Impulses des Druckausgleichsluftstroms zwischen dem Druckstoßelement 11b und dem Filterelement 7b berührungslos erfolgt. In diesem Fall sind das Druckstoßelement 11b und das Filterelement 7b so ausgelegt, dass die schlagartige Kompression der Luft im vorderen Bereich der zweiten Kammer 6b ausreicht, um eine ausreichend große mechanische Erschütterung des Filterelements 7b zu bewirken. Die Ausnutzung eines Impulses eines Druckausgleichsluftstoßes zur Bereitstellung einer effizienten Filterabreinigung bei gleichzeitig fortgesetztem Saugbetrieb eines Staubsaugers kann im Sinne der Erfindung bevorzugt auch als Rückspülung oder als Rückspülprozess bezeichnet werden.

Gleichzeitig wird durch die Abwärtsbewegung des Druckstoßelements 11b die Turbinenöffnung 9b der zweiten Kammer 6b geschlossen, so dass keine fluidische Strömungsverbindung mehr besteht zwischen der zweiten Kammer 6b und der Turbine 3 des Staubsaugers 1. Das bedeutet im Sinne der Erfindung bevorzugt, dass das Druckstoßelement 11b den rechten Strömungspfad verschließt, also den Pfad des zweiten Hauptluftstroms 4b, welcher aus der zweiten Kammer 6b durch die Turbinenöffnung 9b und den Strömungskanalabschnitt 21b in Richtung Turbine 3 des Staubsaugers 1 strömt. Durch die Blockade des Strömungspfads durch die rechte Kammer 6b wird der Aufbau bzw. die Aufrechterhaltung eines Unterdrucks in der zweiten Kammer 6b des Staubsaugers 1 verhindert und die Filterabreinigung des zweiten Filterelements 7b befördert.

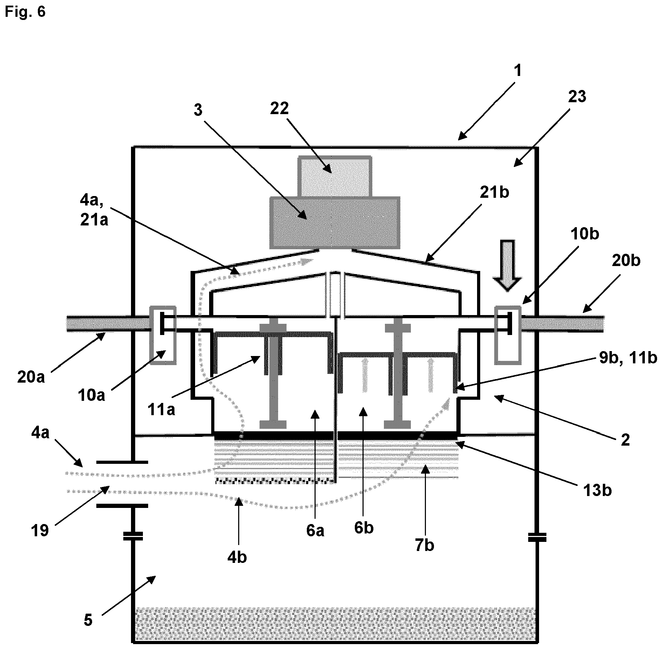

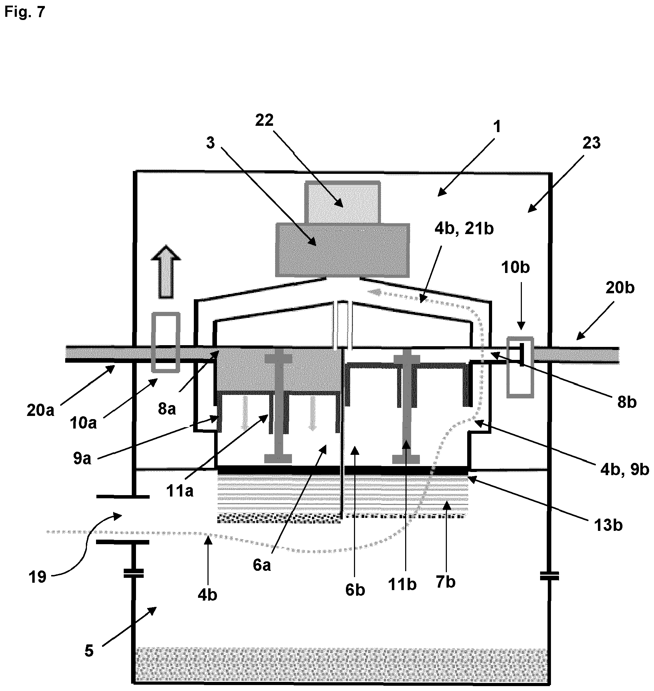

Fig. 6 zeigt eine schematische Darstellung des Staubsaugers 1 am Ende des Abreinigungsvorgangs der zweiten Kammer 6b. Das Ende des Abreinigungsvorgangs wird durch eine erneute Betätigung des Ventils 10b gestartet, wobei der Belüftungskanal 20b bzw. die Einströmöffnung 8b der zweiten Kammer 6b durch die Betätigung des Ventils 10b geschlossen wird. Das Schlie-ßen des Belüftungsventils 10b wird in Fig. 6 durch den nach unten gerichteten, umrandeten Pfeil oberhalb des Ventils 10b angedeutet. Durch das Schließen des zweiten Belüftungskanals 20a besteht keine fluidische Verbindung mehr zwischen der zweiten Kammer 6b und der Umgebung des Staubsaugers 1. Das Druckstoßelement 11b bewegt sich wieder nach oben, so dass die Turbinenöffnung 9b der zweiten Kammer 6b freigegeben wird und sich erneut ein Unterdruck in der zweiten Kammer 6b aufbauen kann. Die Bewegung des Druckstoßelements 11b in die Raumrichtung «nach oben» wird durch die beiden dunklen Pfeile angedeutet, die unterhalb des Druckstoßelements 11b abgebildet sind. Durch die Freigabe der Turbinenöffnung 9b der zweiten Kammer 6b kann sich in der zweiten Kammer 6b erneut ein Unterdruck aufbauen, wie er für die Durchführung des Saugbetriebs erforderlich ist. Insbesondere strömt erneut ein Saugluftstrom 4b vom Staubsammelbehälter 5 in die zweite Kammer 6b und durch die Turbinenöffnung 9b weiter zur Turbine 3. Die Fig. 7 bis 9 zeigen einen Filterabreinigungsvorgang der ersten Kammer 6a der vorgeschlagenen Filtereinrichtung 2. Dabei entsprechen sich jeweils der Inhalt der Figuren 4 und 7, 5 und 8 und 6 und 9, wobei die Bezugszeichen «b» in der Beschreibung durch ein «a» zu ersetzen sind. Auf eine ausführliche Erläuterung der Abbildungen 7 bis 9 wird daher verzichtet. In den Fig. 7 und 8 ist zu sehen, dass während der Abreinigung des Filterelements 7a in der ersten Kammer 6a des Staubsaugers 1 der Luftstrom 4a blockiert ist, während der Luftstrom 4b durch die zweite Kammer 6a des Staubsaugers 1 weiter fließen kann. Das Öffnen des Belüftungsventils 10a wird in Fig. 7 durch den umrandeten Pfeil nach oben oberhalb des Ventils 10a symbolisiert. In Fig. 8 steht dieser Pfeil dafür, dass das Belüftungsventil 10a geöffnet vorliegt. Die dunklen Pfeile unterhalb des Druckstoßelements 11a, die in den Fig. 7 und 8 nach unten zeigen, symbolisieren die vertikale Abwärtsbewegung des Druckstoßelements 11a durch den eindringenden atmosphärischen Druck in die erste Kammer 6a. Die dadurch bewirkte Abreinigung des Filterelements 7a sorgt dafür, dass sich der Filterkuchen 24 vom Filterelement 7a löst und in den Sammelbehälter 5 fällt. Der Saugbetrieb des Staubsaugers 1 wird durch die zweite Kammer 6b im Wesentlichen unterbrechungsfrei fortgesetzt.

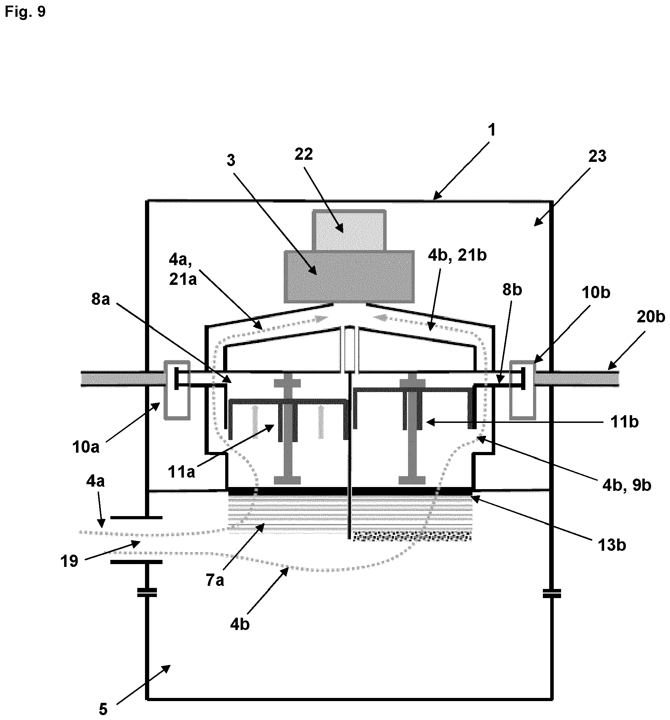

In Fig. 9 liegen beide Belüftungsventile 10a, 10b geschlossen vor. In der gerade abgereinigten ersten Kammer 6a wird wieder Unterdruck aufgebaut und das Druckstoßelement 11a bewegt sich in eine Raumrichtung nach oben in die Parkposition. Beide Turbinenöffnungen 9a, 9b liegen nunmehr wieder geöffnet vor und die Hauptluftströme 4a, 4b können durch die jeweiligen Kammern 6a, 6b des Staubsaugers 1 fließen. Mithin sind beide Strömungspfade im Staubsauger 1, sowie die Strömungskanalabschnitte 21a, 21b geöffnet, während die Einströmöffnungen 8a, 8b und die Belüftungskanäle 20a, 20b geschlossen sind.

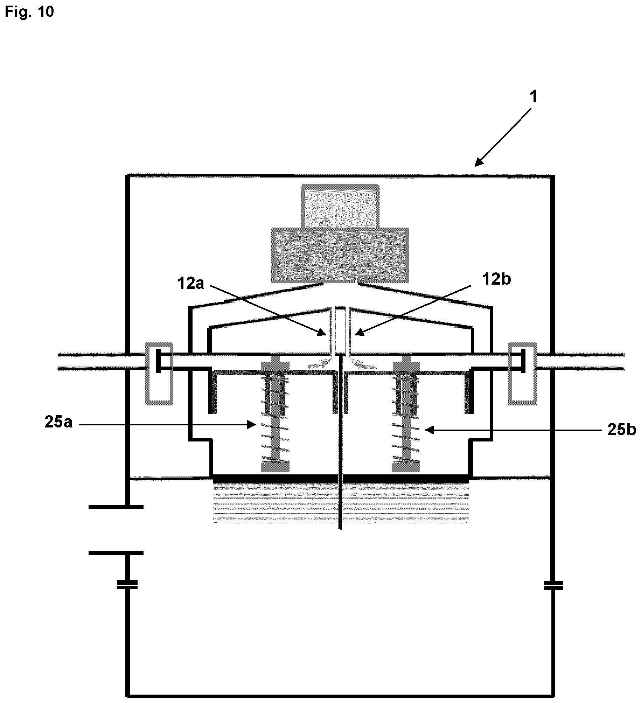

Fig. 10 zeigt die Rückstellung der Druckstoßelemente 11a, 11b nach Abschluss der Abreinigung der Filterelemente 7a, 7b. Die Rückstellung der Druckstoßelemente 11a, 11b kann technisch insbesondere auf zwei Weisen umgesetzt werden. Gemäß einer ersten Alternative können zwischen den Kammern 6a, 6b und der Turbine 3 bzw. dem Turbineneinlass sog. Bypass-Kanäle 12a, 12b vorgesehen sein, in denen aufgrund ihrer Ausgestaltung und ihrer räumlichen Nähe zur Turbine 3 ein besonders starker Unterdruck herrscht. Dieser starke Unterdruck in den Bypass-Kanälen 12a, 12b der Kammern 6a, 6b kann vorteilhafterweise dazu verwendet werden, um die Druckstoßelemente 11a, 11b zu einer Vertikalbewegung nach oben zu veranlassen. Mit anderen Worten können die Druckstoßelemente 11a, 11b durch den in den Bypass-Kanälen 12a, 12b herrschenden starken Unterdruck nach oben angesaugt werden, so dass sie in die Parkposition zurückkehren, in der der Saugbetrieb durch die jeweilige Kammer 6a, 6b durchgeführt werden kann. Ergänzend oder alternativ zu den Bypass-Kanälen 12a, 12b können in dem Staubsauger 1 Federn 25 vorgesehen sein. Bei diesen Federn 25 kann es sich beispielsweise um Druckfedern handeln, die durch die Abwärtsbewegung der Druckstoßelemente 11a, 11b komprimiert werden. Nach Ende der Abreinigung der Filterelemente 7a, 7b können die Druckstoßelemente 11a, 11b mit Hilfe der in den Federn 25 gespeicherten Federkraft in die Parkposition zurückgestellt werden. Es ist somit im Sinne der Erfindung bevorzugt, dass in den Kammern 6a, 6b des vorgeschlagenen Staubsaugers 1 Bypass-Kanäle 12a, 12b und/oder Federn 25 vorgesehen sind, die dazu eingerichtet sind, eine Rückstellung der Druckstoßelemente 11a, 11b zu bewirken und/oder zu unterstützen.

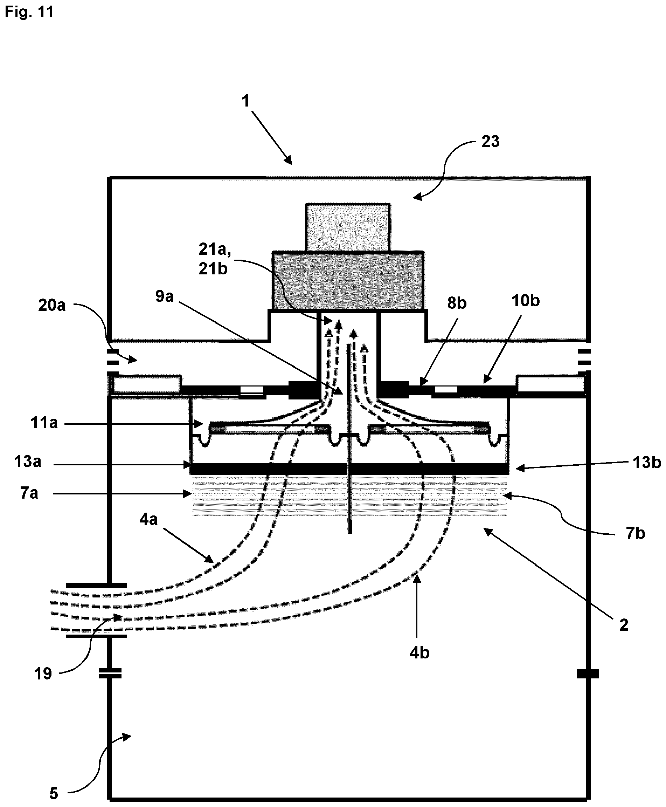

Fig. 11 zeigt eine schematische Seitenansicht eines Staubsaugers 1 mit einer bevorzugten Ausführungsform der vorgeschlagenen Filtereinrichtung 2 in horizontaler Anordnung. Dargestellt ist ein Staubsauger 1 mit einem Staubsauger-Kopf 23 in einem oberen Bereich und einem Staubsammelbehälter 5 in einem unteren Bereich des Staubsaugers 1. In dem Staubsauger-Kopf 23 sind die Turbine 3 und der Motor 22 vorgesehen. Der Staubsammelbehälter 5 weist einen Saugschlauch-Einlass 19 zum Anschluss eines Saugschlauches auf. In dem Staubsammelbehälter 5 sind zwei Kammern 6a, 6b vorgesehen, die in der in Fig. 11 dargestellten Ausgestaltung des Staubsaugers 1 von Luftströmen 4a, 4b durchströmt werden, die von unten nach oben strömen, während die Strömungsrichtung bei dem Staubsauger 1 in Fig. 1 (vertikale Anordnung der Kammern 6a, 6b) in seitlicher Richtung von rechts nach links bzw. von links nach rechts erfolgt.

Beim Durchströmen der Kammern 6a, 6b passieren die Luftströme 4a, 4b zunächst die Filterelemente 7a, 7b, bevor sie durch die Einlassöffnungen 13a, 13b in den vorderen Teil der Kammern 6a, 6b gelangen. Von dort setzen die Luftströme 4a, 4b ihren Weg durch die Turbinenöffnungen 9a, 9b fort, bis sie in die der Turbine 3 vorgelagerten Strömungskanalabschnitte 21a, 21b gelangen. Dabei werden die Turbinenöffnungen 9a, 9b im Saugbetriebsfall durch die Druckstoßelemente 11a, 11b freigegeben und im Abreinigungsfall geschlossen.

Die Einströmöffnungen 8a, 8b der Kammern 6a, 6b stehen in fluidischer Verbindung mit Belüftungskanälen 20a, 20b, die mit der Umgebung des Staubsaugers 1 in Strömungsverbindung stehen. Auf diese Weise können durch die Eintrömöffnungen 8a, 8b Druckausgleichsströme in die Kammern 6a, 6b gelangen. Diese Druckausgleichsströme schwächen den Unterdruck in der abzureinigenden Kammer ab und die Druckstoßelemente 11a, 11b werden zu einer Abwärtsbewegung innerhalb der jeweiligen Kammern 6a, 6b veranlasst. Dabei erzeugen die Druckstoßelemente 11a, 11b Abreinigungsimpulse in Richtung der Filterelemente 7a, 7b. Die Impulse der Druckausgleichströme können vorzugsweise durch einen Kontakt oder kontaktlos auf die Filterelemente 71, 7b übertragen werden, wodurch eine mechanische Erschütterung der Filterelemente 7a, 7b hervorgerufen wird. Dies führt wiederum zu einer wirkungsvollen Abreinigung der Filterelemente 7a, 7b.

Tests haben gezeigt, dass vor allem eine horizontale Anordnung der vorgeschlagenen Filtereinrichtung 2 zu einem besonders kompakten Staubsauger 1 führen kann, bei dem die Filtereinrichtung 2 nur wenig Bauraum einnimmt.

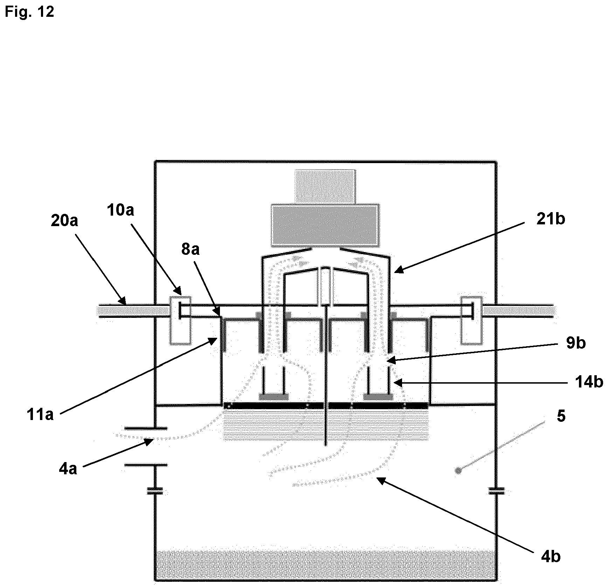

In dem in Fig. 12 dargestellten Ausführungsbeispiel der Erfindung nehmen beide Kammern 6a, 6b der vorgeschlagenen Filtereinrichtung 2 am Saugbetrieb des Staubsaugers 1 teil. Die Belüftungsventile 10a, 10b sind geschlossen, ebenso die Einströmöffnungen 8a, 8b der beiden Kammern 6a, 6b. Die Druckstoßelemente 11a, 11b liegen in ihren Parkpositionen im oberen Bereich der Kammern 6a, 6b vor. Dadurch sind die Turbinenöffnungen 9a, 9b frei und die Saugströme 4a, 4b können durch die Turbinenöffnungen 9a, 9b in Richtung Turbine 3 eingesaugt werden. In dem in Fig. 12 dargestellten Ausführungsbeispiel der Erfindung liegen die Turbinenöffnungen 9a, 9b in den Axialführungen 14a, 14b angeordnet vor. Die Turbinenöffnungen 9a, 9b können insbesondere von Öffnungsschlitzen in den Axialführungen 14a, 14b gebildet werden, wobei die Axialführungen 14a, 14b insbesondere von Rohren gebildet werden können oder Rohre umfassen können. Die Strömungskanalabschnitte 21a, 21b können in dieser Ausgestaltung der Erfindung insbesondere in den Axialführungen 14a, 14b liegen.

### Bezugszeichenliste

- 1: Staubsauger
- 2: Filtereinrichtung
- 3: Turbineneinrichtung
- 4: Hauptluftstrom, 4a: erster Hauptluftstrom, 4b: zweiter Hauptluftstrom
- 5: Sammelbehälter
- 6: Kammer, 6a: erste Kammer, 6b: zweite Kammer
- 7: Filterelement, 7a: erstes Filterelement, 7b: zweites Filterelement
- 8: Einströmöffnung, 8a: erste Einströmöffnung, 8b: zweite Einströmöffnung
- 9: Turbinenöffnung, 9a: erste Turbinenöffnung, 9b: zweite Turbinenöffnung
- 10: Ventil, 10a: erstes Ventil, 10b: zweites Ventil
- 11: Druckstoßelement, 11 a: erstes Druckstoßelement, 11b: zweites Druckstoßelement
- 12: Bypass-Kanäle, 12a: Bypass-Kanal in der ersten Kammer, 12b: Bypass-Kanal in der zweiten Kammer
- 13: Einlassöffnung, 13a: erste Einlassöffnung, 13b: zweite Einlassöffnung
- 14: Axialführung, 14a: erste Axialführung, 14b: zweite Axialführung
- 19: Saugschlauch-Einlass
- 20: Belüftungskanal
- 21: Strömungskanalabschnitt
- 22: Motor
- 23: Staubsauger-Kopf
- 24: Filterkuchen
- 25: Federn

## Patentansprüche

1. Filtereinrichtung (2) für einen Staubsauger (1) mit einer Turbineneinrichtung (3) und einem Motor (22) zum Erzeugen eines ersten Hauptluftstroms (4a) und/oder eines zweiten Hauptluftstroms (4b) durch einen Sammelbehälter (5) des Staubsaugers (1) **gekennzeichnet durch**
eine erste Kammer (6a) und eine zweite Kammer (6b) mit je einem Filterelement (7a, 7b) und einer Einströmöffnung (8a, 8b), wobei ein Ventil (10a und/oder 10b) dazu eingerichtet ist, die Einströmöffnung (8) zu öffnen oder zu verschließen, wobei in der Kammer (6) ein Unterdruck vorliegt, wenn die Einströmöffnung (8) verschlossen ist und wobei in der Kammer (6) ein atmosphärischer Druck vorliegt, wenn die Einströmöffnung (8) geöffnet ist,
wobei die Kammern (6a, 6b) ferner je ein Druckstoßelement (11a, 11b) umfassen, wobei die Druckstoßelemente (11a, 11b) in einer Parkposition und in einer Abreinigungsposition vorliegen können,
wobei ein Umschalten zwischen der Parkposition und der Abreinigungsposition durch ein Einlassen des atmosphärischen Drucks erfolgt, das durch eine Betätigung des Ventils (10) bewirkt wird,
wobei die Druckstoßelemente (11a, 11b) dazu eingerichtet sind, beim Einnehmen der Abreinigungsposition einen Impuls auf das jeweilige Filterelement (7a, 7b) auszuüben, so dass eine Abreinigung des Filterelements (7a, 7b) bewirkt wird.

2. Filtereinrichtung (2) nach Anspruch 1
**dadurch gekennzeichnet, dass**
die Filtereinrichtung (2) Turbinenöffnungen (9a, 9b) umfasst, die dazu eingerichtet sind, eine Strömungsverbindung zwischen den Kammern (6a, 6b) und der Turbineneinrichtung (3) zu ermöglichen.

3. Filtereinrichtung (2) nach Anspruch 1 oder 2
**dadurch gekennzeichnet, dass**
die Kammern (6a, 6b) Einlassöffnungen (13a, 13b) aufweisen und wobei die Filterelemente (7a, 7b) dazu eingerichtet sind, die Einlassöffnungen (13a, 13b) so zu verschließen, dass Staubpartikel aus den Hauptluftströmen (4a, 4b) herausgefiltert werden.

4. Filtereinrichtung (2) nach einem der vorhergehenden Ansprüche
**dadurch gekennzeichnet, dass**
die Filtereinrichtung (2) Axialführungen (14a, 14b) zur Führung der Druckstoßelemente (11a, 11b) aufweisen.

5. Filtereinrichtung (2) nach einem der Ansprüche 2 bis 4
**dadurch gekennzeichnet, dass**
die Turbinenöffnungen (9a, 9b) in Seitenwänden der Kammern (6a, 6b) und/oder in den Axialführungen (14a, 14b) vorliegen.

6. Filtereinrichtung (2) nach einem der vorhergehenden Ansprüche
**dadurch gekennzeichnet, dass**
Belüftungskanäle (20) vorgesehen sind, um die Kammern (6a, 6b) mit einer Umgebung des Staubsaugers (1) zu verbinden.

7. Filtereinrichtung (2) nach einem der vorhergehenden Ansprüche
**dadurch gekennzeichnet, dass**
die beiden Kammern (6a, 6b) im Wesentlichen nebeneinander in dem Staubsauger (1) angeordnet vorliegen.

8. Filtereinrichtung (2) nach einem der vorhergehenden Ansprüche
**dadurch gekennzeichnet, dass**
die Hauptluftströme (4a, 4b) seitlich in die Kammern (6a, 6b) einströmen und anschließend in eine Vertikalströmung umgelenkt werden.

9. Filtereinrichtung (2) nach einem der Ansprüche 1 bis 7
**dadurch gekennzeichnet, dass**
die Hauptluftströme (4a, 4b) von unten in die Kammern (6a, 6b) einströmen und eine Vertikalströmung bilden.

10. Filtereinrichtung (2) nach einem der vorhergehenden Ansprüche
**dadurch gekennzeichnet, dass**
in den Kammern (6a, 6b) Bypass-Kanäle (12a, 12b) und/oder Federn (25) aufweisen, die dazu eingerichtet sind, eine Rückstellung der Druckstoßelemente (11a, 11b) zu unterstützen.

11. Verfahren zum Abreinigen einer Filtereinrichtung (2) in einem Staubsauger (1), wobei das Verfahren durch die folgenden **Schritte gekennzeichnet** ist:
a) Bereitstellung einer Filtereinrichtung (2) nach einem der vorhergehenden Ansprüche in einem Staubsauger (1),
b) Betrieb des Staubsaugers (1), wobei bei Betrieb des Staubsaugers (1) in einem Sammelbehälter (5) des Staubsaugers (1) und in mindestens einer ersten Kammer (6a) oder in einer zweiten Kammer (6b) des Staubsaugers (1) ein Unterdruck herrscht,
c) Erzeugung eines atmosphärischer Druck in einer der Kammern (6a oder 6b) durch Betätigung eines Ventils (10a, 10b), wobei durch die Betätigung des Ventils (10a, 10b) eine Einströmöffnung (8a oder 8b) der Kammer (6a oder 6b) geöffnet wird und ein Positionswechsel eines Druckstoßelements (11a oder 11b) innerhalb der Kammer (6a oder 6b) von einer Parkposition in eine Abreinigungsposition bewirkt wird,
d) Abreinigung eines Filterelements (7a oder 7b) durch den Positionswechsel des Druckstoßelements (11).

12. Verfahren nach Anspruch 11
**dadurch gekennzeichnet, dass**
bei Betrieb des Staubsaugers (1) ein erster Hauptluftstrom (4a) und/oder zweiter Hauptluftstrom (4b) erzeugt wird, der sich zwischen einem Saugschlauch-Einlass (19) und der Turbineneinrichtung (3) ausbildet.

13. Verfahren nach Anspruch 11 oder 12
**dadurch gekennzeichnet, dass**
bei Öffnen eines der Ventile (10a oder 10b) ein Druckausgleichsstrom in die erste Kammer (6a) oder in die zweite Kammer (6b) gelangt.

14. Verfahren nach einem der Ansprüche 11 bis 13
**dadurch gekennzeichnet, dass**
die Abreinigung des Filterelements (7a oder 7b) einer der beiden Kammern (6a oder 6b) bei fortgesetztem Saugbetrieb durch die andere Kammer (6b oder 6a) erfolgt.

15. Verfahren nach einem der Ansprüche 11 bis 14
**dadurch gekennzeichnet, dass**
durch den Positionswechsel des Druckstoßelements (11) die Turbinenöffnungen (9) geschlossen werden.

## Claims

1. Filter device (2) for a vacuum cleaner (1) having a turbine device (3) and a motor (22) for generating a first main air stream (4a) and/or a second main air stream (4b) through a collecting tank (5) of the vacuum cleaner (1),
**characterized by**
a first chamber (6a) and a second chamber (6b), each with a filter element (7a, 7b) and an inflow opening (8a, 8b), wherein a valve (10a and/or 10b) is designed to open or to close the inflow opening (8), wherein a negative pressure prevails in the chamber (6) when the inflow opening (8) is closed and wherein atmospheric pressure prevails in the chamber (6) when the inflow opening (8) is open,
wherein the chambers (6a, 6b) also each comprise a pressure shock element (11a, 11b), wherein the pressure shock elements (11a, 11b) can be in a parked position and in a dedusting position,
wherein a switchover between the parked position and the dedusting position takes place by letting in the atmospheric pressure, this being effected by actuating the valve (10),
wherein the pressure shock elements (11a, 11b) are designed to apply a pulse to the respective filter element (7a, 7b) when the dedusting position is taken up, such that the filter element (7a, 7b) is dedusted.

2. Filter device (2) according to Claim 1,
**characterized in that**
the filter device (2) comprises turbine openings (9a, 9b) which are designed to allow a flow connection between the chambers (6a, 6b) and the turbine device (3).

3. Filter device (2) according to Claim 1 or 2,
**characterized in that**
the chambers (6a, 6b) have inlet openings (13a, 13b) and wherein the filter elements (7a, 7b) are designed to close the inlet openings (13a, 13b) such that dust particles are filtered out of the main air streams (4a, 4b).

4. Filter device (2) according to one of the preceding claims,
**characterized in that**
the filter device (2) has axial guides (14a, 14b) for guiding the pressure shock elements (11a, 11b).

5. Filter device (2) according to one of Claims 2 to 4,
**characterized in that**
the turbine openings (9a, 9b) are present in side walls of the chambers (6a, 6b) and/or in the axial guides (14a, 14b).

6. Filter device (2) according to one of the preceding claims,
**characterized in that**
ventilation channels (20) are provided in order to connect the chambers (6a, 6b) to an environment of the vacuum cleaner (1).

7. Filter device (2) according to one of the preceding claims,
**characterized in that**
the two chambers (6a, 6b) are arranged substantially alongside one another in the vacuum cleaner (1).

8. Filter device (2) according to one of the preceding claims,
**characterized in that**
the main air streams (4a, 4b) flow into the chambers (6a, 6b) from the side and are subsequently deflected into a vertical flow.

9. Filter device (2) according to one of Claims 1 to 7,
**characterized in that**
the main air streams (4a, 4b) flow into the chambers (6a, 6b) from below and form a vertical flow.

10. Filter device (2) according to one of the preceding claims,
**characterized in that**
the chambers (6a, 6b) have bypass channels (12a, 12b) and/or springs (25), which are designed to support restoration of the pressure shock elements (11a, 11b).

11. Method for dedusting a filter device (2) in a vacuum cleaner (1), wherein the method is **characterized by** the following **steps:**
a) providing a filter device (2) according to one of the preceding claims in a vacuum cleaner (1),
b) operating the vacuum cleaner (1), wherein, during operation of the vacuum cleaner (1), a negative pressure prevails in a collecting tank (5) of the vacuum cleaner (1) and in at least a first chamber (6a) or in a second chamber (6b) of the vacuum cleaner (1),
c) generating atmospheric pressure in one of the chambers (6a or 6b) by actuating a valve (10a, 10b), wherein, as a result of the valve (10a, 10b) being actuated, an inflow opening (8a or 8b) of the chamber (6a or 6b) is opened and a pressure shock element (11a or 11b) within the chamber (6a or 6b) is made to change position from a parked position into a dedusting position,
d) dedusting a filter element (7a or 7b) by the change in position of the pressure shock element (11).

12. Method according to Claim 11,
**characterized in that,**
when the vacuum cleaner (1) is in operation, a first main air stream (4a) and/or second main air stream (4b) is generated, said air stream(s) forming between a suction hose inlet (19) and the turbine device (3).

13. Method according to Claim 11 or 12,
**characterized in that,**
when one of the valves (10a or 10b) is opened, a pressure equalizing stream passes into the first chamber (6a) or into the second chamber (6b).

14. Method according to one of Claims 11 to 13,
**characterized in that**
the filter element (7a or 7b) of one of the two chambers (6a or 6b) is dedusted upon continued suction operation through the other chamber (6b or 6a).

15. Method according to one of Claims 11 to 14,
**characterized in that**
the turbine openings (9) are closed by the change in position of the pressure shock element (11).

## Revendications

1. Dispositif filtrant (2) pour un aspirateur (1) avec un dispositif (3) formant turbine et un moteur (22) pour générer un premier flux d'air principal (4a) et/ou un deuxième flux d'air principal (4b) à travers un récipient collecteur (5) de l'aspirateur (1) **caractérisé par**
une première chambre (6a) et une deuxième chambre (6b) avec chacune un élément filtrant (7a, 7b) et un orifice d'admission (8a, 8b), une vanne (10a et/ou 10b) étant conçue pour ouvrir ou fermer l'orifice d'admission (8), une dépression existant dans la chambre (6) lorsque l'orifice d'admission (8) est fermé et une pression atmosphérique existant dans la chambre (6) lorsque l'orifice d'admission (8) est ouvert,
les chambres (6a, 6b) comprenant en outre chacune un élément (11a, 11b) d'impulsion de pression, les éléments (11a, 11b) d'impulsion de pression étant aptes à être dans une position de rangement et dans une position de nettoyage,
une commutation entre la position de rangement et la position de nettoyage étant effectuée par une admission de la pression atmosphérique, provoquée par un actionnement de la vanne (10),
les éléments (11a, 11b) d'impulsion de pression étant adaptés pour exercer une impulsion sur l'élément filtrant respectif (7a, 7b) lors de la venue en position de nettoyage, de sorte qu'un nettoyage de l'élément filtrant (7a, 7b) soit effectué.

2. Dispositif filtrant (2) selon la revendication 1,
**caractérisé en ce que**
le dispositif filtrant (2) comprend des orifices de turbine (9a, 9b) qui sont adaptées pour permettre une communication d'écoulement entre les chambres (6a, 6b) et le dispositif (3) formant turbine.

3. Dispositif filtrant (2) selon la revendication 1 ou la revendication 2,
**caractérisé en ce que**
les chambres (6a, 6b) présentent des orifices d'entrée (13a, 13b) et les éléments filtrants (7a, 7b) étant adaptés pour fermer les orifices d'entrée (13a, 13b) de manière à ce que les particules de poussière soient filtrées hors des flux d'air principaux (4a, 4b).

4. Dispositif filtrant (2) selon l'une des revendications précédentes,
**caractérisé en ce que**
le dispositif filtrant (2) comporte des guides axiaux (14a, 14b) pour le guidage des éléments (11a, 11b) d'impulsion de pression.

5. Dispositif filtrant (2) selon l'une des revendications 2 à 4,
**caractérisé en ce que**
les orifices de turbine (9a, 9b) sont présents dans des parois latérales des chambres (6a, 6b) et/ou dans les guides axiaux (14a, 14b).

6. Dispositif filtrant (2) selon l'une des revendications précédentes,
**caractérisé en ce que**
des canaux de ventilation (20) sont prévus pour relier les chambres (6a, 6b) à un environnement de l'aspirateur (1).

7. Dispositif filtrant (2) selon l'une des revendications précédentes,
**caractérisé en ce que**
les deux chambres (6a, 6b) sont disposées sensiblement côte à côte dans l'aspirateur (1).

8. Dispositif filtrant (2) selon l'une des revendications précédentes,
**caractérisé en ce que**
les flux d'air principaux (4a, 4b) entrent latéralement dans les chambres (6a, 6b) et sont ensuite déviés en un flux vertical.

9. Dispositif filtrant (2) selon l'une des revendications 1 à 7,
**caractérisé en ce que**
les flux d'air principaux (4a, 4b) entrent par le bas dans les chambres (6a, 6b) et forment un flux vertical.

10. Dispositif filtrant (2) selon l'une des revendications précédentes,
**caractérisé en ce que**
des canaux de dérivation (12a, 12b) et/ou des ressorts (25) sont présents dans les chambres (6a, 6b), qui sont adaptés pour aider à un retour des éléments (11a, 11b) d'impulsion de pression.

11. Procédé de nettoyage d'un dispositif filtrant (2) dans un aspirateur (1), le procédé étant **caractérisé par** les étapes suivantes :
a) fourniture d'un dispositif filtrant (2) selon l'une des revendications précédentes dans un aspirateur (1),
b) fonctionnement de l'aspirateur (1), dans lequel, lors du fonctionnement de l'aspirateur (1), il règne une dépression dans un récipient collecteur (5) de l'aspirateur (1) et dans au moins une première chambre (6a) ou dans une deuxième chambre (6b) de l'aspirateur (1),
c) création d'une pression atmosphérique dans l'une des chambres (6a ou 6b) par actionnement d'une vanne (10a, 10b), un orifice d'entrée (8a ou 8b) de la chambre (6a ou 6b) étant ouvert par l'actionnement de la vanne (10a, 10b) et un changement de position d'un élément (11a ou 11b) d'impulsion de pression étant provoqué à l'intérieur de la chambre (6a ou 6b), d'une position de rangement à une position de nettoyage,
d) nettoyage d'un élément filtrant (7a ou 7b) par le changement de position de l'élément (11) d'impulsion de pression.

12. Procédé selon la revendication 11,
**caractérisé en ce que**
lors du fonctionnement de l'aspirateur (1), un premier flux d'air principal (4a) et/ou un deuxième flux d'air principal (4b) est généré et se forme entre une entrée de tuyau d'aspiration (19) et le dispositif (3) formant turbine.

13. Procédé selon la revendication 11 ou la revendication 12,
**caractérisé en ce que**
lors de l'ouverture de l'une des vannes (10a ou 10b), un flux d'équilibrage de pression arrive dans la première chambre (6a) ou dans la deuxième chambre (6b).

14. Procédé selon l'une des revendications 11 à 13,
**caractérisé en ce que**
le nettoyage de l'élément filtrant (7a ou 7b) de l'une des deux chambres (6a ou 6b) est effectué tandis que l'opération d'aspiration se poursuit à travers l'autre chambre (6b ou 6a).

15. Procédé selon l'une des revendications 11 à 14,
**caractérisé en ce que**
le changement de position de l'élément (11) d'impulsion de pression entraîne la fermeture des orifices (9) de la turbine.
